(19) Europäisches Patentamt
European Patent Office
Office européen des brevets

(11) Veröffentlichungsnummer: **0 422 538 B1**

(12) # EUROPÄISCHE PATENTSCHRIFT

(45) Veröffentlichungstag der Patentschrift: **09.03.94**

(51) Int. Cl.[5]: **C09B 69/00**, C09K 19/38, C08G 63/685, C08G 63/18

(21) Anmeldenummer: **90119209.6**

(22) Anmeldetag: **06.10.90**

(54) **Malonsäurefarbstoffe und deren Polykondensationsprodukte.**

(30) Priorität: **13.10.89 DE 3934190**

(43) Veröffentlichungstag der Anmeldung:
**17.04.91 Patentblatt 91/16**

(45) Bekanntmachung des Hinweises auf die Patenterteilung:
**09.03.94 Patentblatt 94/10**

(84) Benannte Vertragsstaaten:
**CH DE FR GB IT LI**

(56) Entgegenhaltungen:
**EP-A- 0 090 282**
**EP-A- 0 112 798**
**EP-A- 0 172 517**
**EP-A- 0 260 687**

**MAKROMOL. CHEM., RAPID COMMUN., Band 6, Nr. 4, 1985, Seiten 291-299, Basel, CH; B. RECK et al.: "Combined liquid crystalline polymers: Mesogens in the main chain and as side groups"**

(73) Patentinhaber: **BASF Aktiengesellschaft**
**Carl-Bosch-Strasse 38**
**D-67063 Ludwigshafen(DE)**

(72) Erfinder: **Etzbach, Karl-Heinz Dr.**
**Carl-Bosch-Ring 55**
**W-6710 Frankenthal(DE)**
Erfinder: **Beck, Karin Heidrun, Dr.**
**Dackenheimer Strasse 3**
**W-6700 Ludwigshafen(DE)**
Erfinder: **Wagenblast, Gerhard, Dr.**
**Hanns-Fay-Strasse 3**
**W-6710 Frankenthal(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die vorliegende Erfindung betrifft neue Malonsäurefarbstoffe der Formel I

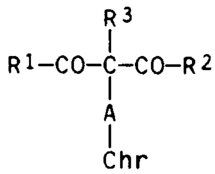

(I),

in der

| | |
|---|---|
| $R^1$ und $R^2$ | gleich oder verschieden sind und unabhängig voneinander jeweils Hydroxy, $C_1$-$C_6$-Alkoxy, Chlor oder Brom, |
| $R^3$ | Wasserstoff oder $C_1$-$C_6$-Alkyl, |
| A | $C_1$-$C_{20}$-Alkylen, das gegebenenfalls durch ein oder mehrere Sauerstoffatome oder eine oder mehrere Imino- oder $C_1$-$C_4$-Alkyliminogruppen unterbrochen ist, und |
| Chr | den Rest eines Chromophors, der sich von einem Anthrachinon-, Perylen-, Disazo-, Trisazo- oder, wenn $R^3$ für $C_1$-$C_6$-Alkyl steht, auch von einem Monoazofarbstoff ableitet, bedeuten, |

sowie deren Polykondensationsprodukte.

Aus der EP-A-172 517 sind Azofarbstoffe bekannt, bei denen der 6-(4-Cyanophenylazophen-4-oxy)-hexylrest oder der 10-(4-Methoxyphenylazophen-4-oxy)decylrest an Malonsäurediethylester geknüpft ist. Weiterhin ist dort auch das Polykondensationsprodukt der Cyanoverbindung mit 4,4'-Bis(6-hydroxyhexyloxy)biphenyl sowie der Methoxyverbindung mit 4,4'-Bis(2-hydroxyethoxy)biphenyl beschrieben.

Gegenstand der EP-A-90 282 sind Polymere und Copolymere, die sich von Acrylsäure ableiten und die über einen Chromophor aus der Reihe der Azo- oder Anthrachinonfarbstoffe verfügen, wobei der Chromophor jeweils über einen Spacer mit der Carboxylgruppe der Acrylsäure verbunden ist.

Ähnliche Acrylsäurepolymere auf Basis von 1,5-Diamino-4,8-dihydroxyanthrachinon sind in der EP-A-260 687 beschrieben.

Aufgabe der vorliegenden Erfindung war es, neue Farbstoffmonomere bereitzustellen, die problemlos polykondensieren und die Polykondensation möglichst nicht negativ beeinflussen.

Außerdem sollten die neuen Farbstoffe auf Basis von Malonsäure über ein vorteilhaftes anwendungstechnisches Eigenschaftsprofil, insbesondere über eine gute Verträglichkeit mit einer Polymermatrix verfügen.

Daneben sollten die polykondensierten Farbstoffe möglichst temperatur- und lichtstabil sein, einen hohen Dichroismus aufweisen und bei Verwendung als Baustein in flüssigkristallinen Polymeren die Eigenschaften der flüssigkristallinen Matrix, z.B. den Klärpunkt, das Phasenverhalten, die Viskosität oder die Ausbildung homogen planarer oder homöotroper Texturen, so wenig wie möglich verändern.

Demgemäß wurden die eingangs näher bezeichneten Malonsäurefarbstoffe der Formel I gefunden.

Alle in der obengenannten Formel auftretenden Alkyl- und Alkylengruppen können sowohl geradkettig als auch verzweigt sein.

Wenn der Rest A durch ein oder mehrere Sauerstoffatome oder eine oder mehrere Imino- oder Alkyliminogruppen unterbrochen ist, sind solche Reste bevorzugt, die durch 1 oder 2 Sauerstoffatome oder Imino- oder Alkyliminogruppen unterbrochen sind.

Reste $R^1$ und $R^2$ sind z.B. Methoxy, Ethoxy, Propoxy, Isopropoxy, Butoxy, Isobutoxy, sec-Butoxy, Pentyloxy, Isopentyloxy, Neopentyloxy, tert-Pentyloxy, Hexyloxy oder 2-Methylpentyloxy.

Reste $R^3$ sind z.B. Methyl, Ethyl, Propyl, Isopropyl, Butyl, Isobutyl, sec-Butyl, Pentyl, Isopentyl, Neopentyl, tert-Pentyl, Hexyl oder 2-Methylhexyl.

Reste A sind z.B. $-CH_2-$, $-(CH_2)_2-$, $-(CH_2)_3-$, $-(CH_2)_4-$, $-(CH_2)_5-$, $-(CH_2)_6-$, $-(CH_2)_7-$, $-(CH_2)_8-$, $-(CH_2)_9-$, $-(CH_2)_{10}-$, $-(CH_2)_{11}-$, $-(CH_2)_{12}-$, $-(CH_2)_{13}-$, $-(CH_2)_{14}-$, $-(CH_2)_{15}-$, $-(CH_2)_{16}-$, $-(CH_2)_{17}-$, $-(CH_2)_{18}-$, $-(CH_2)_{19}-$, $-(CH_2)_{20}-$, $-(CH_2)_2-O-(CH_2)_2-$, $-(CH_2)_3-O-(CH_2)_2-$, $-(CH_2)_3-O-(CH_2)_3-$, $-(CH_2)_3-O-(CH_2)_4-$,

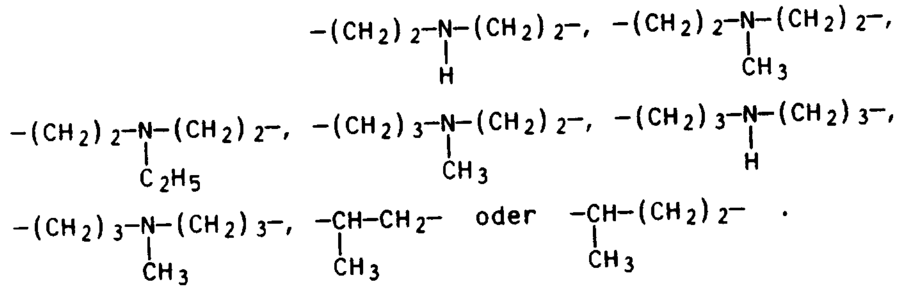

Der Chromophorrest Chr leitet sich erfindungsgemäß von einem Anthrachinon-, Perylen-, Disazo-, Trisazo- oder, wenn $R^3$ für $C_1$-$C_6$-Alkyl steht, auch von einem Monoazofarbstoff ab.

Geeignete Reste von Anthrachinonfarbstoffen sind z.B. solche der Formel II

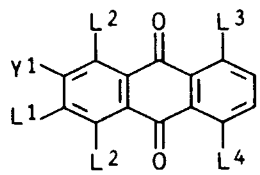

(II),

in der

$Y^1$ eine chemische Bindung, Sauerstoff, Schwefel, Imino, $C_1$-$C_4$-Alkylimino, Phenylen, Phenylenoxy, Phenylenthio oder einen Rest der Formel -CO-, -CO-O-, -O-CO-, -CO-S-, -S-CO-, -CO-NH-, -NH-CO-, -CO-M- oder -M-CO-, wobei M jeweils für $C_1$-$C_4$-Alkylimino steht,

$L^1$ Wasserstoff oder Cyano oder $L^1$ und $Y^1$ zusammen den Rest der Formel

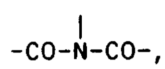

der über die Carbonylgruppen an den Benzoring geknüpft ist,

$L^2$ gleich oder verschieden ist und Amino oder Hydroxy,

$L^3$ Wasserstoff, Amino oder Hydroxy und

$L^4$ Wasserstoff oder Amino bedeuten.

Bei den diesen Resten zugrundeliegenden Anthrachinonfarbstoffen handelt es sich um an sich bekannte Farbstoffe. Sie sind z.B. in der EP-A-90 282, EP-A-260 687 oder Mol. Cryst. Liq. Cryst. Band 150a, Seiten 1 bis 168, 1987, beschrieben.

Geeignete Reste von Perylenfarbstoffen sind z.B. solche der Formel III

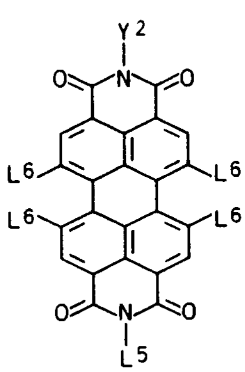

(III),

in der

$Y^2$ eine chemische Bindung, Sauerstoff, Phenylen oder Phenylenoxy,

$L^5$ $C_1$-$C_{20}$-Alkyl, das gegebenenfalls durch ein Sauerstoffatom unterbrochen ist, oder Phenyl, das

durch $C_1$-$C_{13}$-Alkyl oder $C_1$-$C_{13}$-Alkoxy ein- oder mehrfach substituiert ist, und

$L^6$ Wasserstoff, Chlor, Phenoxy oder durch Halogen, $C_1$-$C_4$-Alkyl oder $C_1$-$C_4$-Alkoxy substituiertes Phenoxy bedeuten.

Bei den diesen Resten zugrundeliegenden Perylenfarbstoffen handelt es sich um an sich bekannte Farbstoffe. Sie sind z.B. in der DE-A-2 451 782, US-A-4 379 934 oder US-A-4 446 324 beschrieben.

Geeignete Reste von Disazofarbstoffen sind z.B. solche der Formel IV

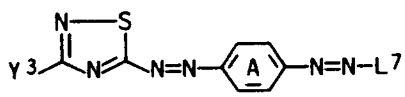 (IV),

in der

$Y^3$ eine chemische Bindung, Sauerstoff, Schwefel, Imino, $C_1$-$C_4$-Alkylimino, Phenylen, Phenylenoxy, SO oder $SO_2$ und

$L^7$ einen Rest der Formel

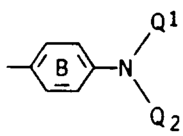 , 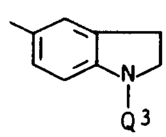 , 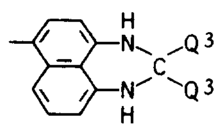 , 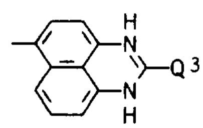 ,

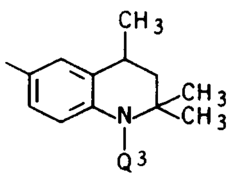 , 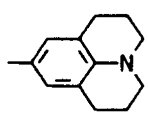 , 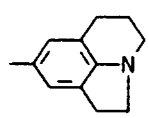 oder 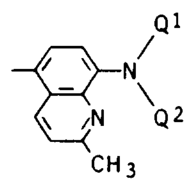

bedeuten, wobei die Ringe A und/oder B durch $C_1$-$C_4$-Alkyl, $C_1$-$C_4$-Alkoxy oder Halogen ein- oder mehrfach substituiert und durch einen Benzoring anelliert sein können und

$Q^1$ und $Q^2$ gleich oder verschieden sind und unabhängig voneinander jeweils für Wasserstoff, $C_1$-$C_{12}$-Alkyl, das gegebenenfalls durch Phenyl, ($C_1$-$C_7$-Alkylcyclohexyl)phenyl, Cyano, Hydroxy oder $C_1$-$C_4$-Alkanoyl substituiert ist, oder $C_5$-$C_7$-Cycloalkyl oder $Q^1$ und $Q^2$ zusammen mit dem sie verbindenden Stickstoffatom für Pyrrolidono, Piperidino, Morpholino, Piperazino oder N-($C_1$-$C_4$-Alkyl)piperazino und

$Q^3$ für Wasserstoff, $C_1$-$C_4$-Alkyl oder $C_5$-$C_7$-Cycloalkyl

stehen.

Bei den diesen Resten zugrundeliegenden Disazofarbstoffen handelt es sich um an sich bekannte Farbstoffe. Sie sind z.B. in der US-A-4 681 699 beschrieben.

Geeignete Reste von Trisazofarbstoffen sind z.B. solche der Formel V

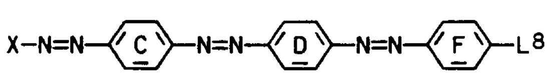 (V),

in der

X einen Rest der Formel

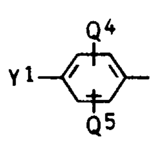 , 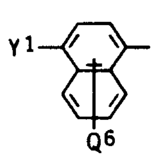 oder 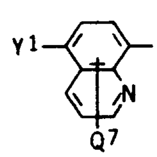 ,

wobei

$Y^1$ jeweils die obengenannte Bedeutung besitzt und

$Q^4$ und $Q^5$ gleich oder verschieden sind und unabhängig voneinander jeweils für Wasserstoff, Halogen, $C_1$-$C_4$-Alkyl oder $C_1$-$C_4$-Alkoxy,

$Q^6$ für Wasserstoff, Methyl, Hydroxy oder $C_1$-$C_4$-Alkoxy und

$Q^7$ für Methyl stehen und der Chinolinrest über die dem Ringstickstoff benachbarte Bindung an den Rest A gebunden ist, und

$L^8$ $C_1$-$C_{24}$-Alkoxy, Benzyloxy, Phenylethoxy, $C_1$-$C_{24}$-Mono- oder Dialkylamino, Benzylamino, Phenylethylamino, Anilino, N-($C_1$-$C_{12}$-Alkyl)-N-benzylamino, N-($C_1$-$C_{12}$-Alkyl)-N-phenylethylamino oder N-($C_1$-$C_{12}$-Alkyl)anilino, wobei die in den obengenannten Resten auftretenden Phenylgruppen jeweils durch $C_1$-$C_{12}$-Alkyl, Cyclohexyl, 4-($C_1$-$C_{12}$-Alkyl)cyclohexyl, $C_1$-$C_{24}$-Alkoxy, Phenoxy oder $C_1$-$C_{24}$-Alkanoyloxy substituiert sein können, bedeuten und die Ringe C, D und F jeweils durch Methyl, Ethyl, Methoxy oder Chlor ein- oder mehrfach substituiert und durch einen Benzoring anelliert sein können.

Bei den diesen Resten zugrundeliegenden Trisazofarbstoffen handelt es sich um an sich bekannte Farbstoffe. Sie sind z.B. in der US-A-4 724 259, US-A-4 721 779 oder EP-A-268 154 beschrieben.

Geeignete Reste von Monoazofarbstoffen sind z.B. solche der Formel VI

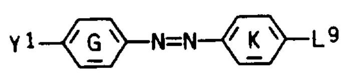

(VI),

in der $Y^1$ die obengenannte Bedeutung besitzt und $L^9$ Cyano oder $C_1$-$C_4$-Alkoxy bedeutet und die Ringe G und K jeweils noch durch Halogen oder $C_1$-$C_4$-Alkyl substituiert sein können.

Die diesen Resten zugrundeliegenden Monoazofarbstoffe sind ebenfalls bekannt.

Bevorzugt sind Malonsäurefarbstoffe der Formel I, in der Chr den Rest eines Chromophors bedeutet, der sich von einem Anthrachinon-, Perylen-, Disazo- oder Trisazofarbstoff ableitet, wobei insbesondere der Rest, der sich von einem Anthrachinon-, Perylen- oder Trisazofarbstoff ableitet, hervorzuheben ist.

Besonders bevorzugt sind Malonsäurefarbstoffe der Formel I, in der Chr den Rest eines Chromophors bedeutet, der sich von einem Anthrachinonfarbstoff ableitet und die Formel IIa oder IIb

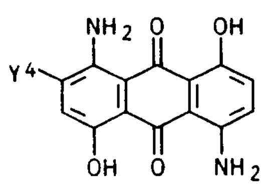

(IIa)

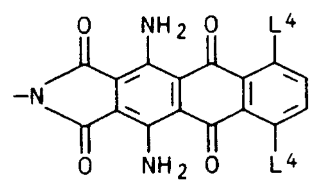

(IIb)

aufweist, wobei $Y^4$ für Phenylen oder Phenylenoxy, das über das Sauerstoffatom an den Rest A gebunden ist, steht und $L^4$ jeweils die obengenannte Bedeutung besitzt.

Weiterhin besonders bevorzugt sind Malonsäurefarbstoffe der Formel I, in der Chr den Rest eines Chromophors bedeutet, der sich von einem Perylenfarbstoff ableitet und die Formel IIIa

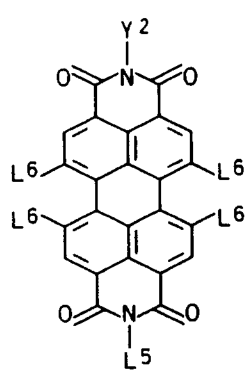

(IIIa)

aufweist, in der

$Y^2$ eine chemische Bindung,

$L^5$ $C_1$-$C_{12}$-Alkyl und

$L^6$ Wasserstoff oder Chlor bedeuten.

Weiterhin besonders bevorzugt sind Malonsäurefarbstoffe der Formel I, in der Chr den Rest eines Chromophors bedeutet, der sich von einem Disazofarbstoff ableitet und die Formel IVa

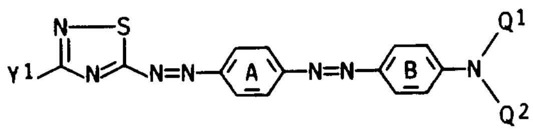

(IVa)

aufweist, wobei

$Y^1$ die obengenannte Bedeutung besitzt und

$Q^1$ und $Q^2$ unabhängig voneinander jeweils für Wasserstoff oder $C_1$-$C_8$-Alkyl stehen und die Ringe A und B durch Methyl oder Methoxy ein- oder zweifach substituiert und durch einen Benzoring anelliert sein können.

Weiterhin besonders bevorzugt sind Malonsäurefarbstoffe der Formel I, in der Chr den Rest eines Chromophors bedeutet, der sich von einem Trisazofarbstoff ableitet und die Formel Va

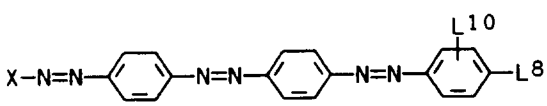

(Va)

aufweist, wobei

X für einen Rest der Formel

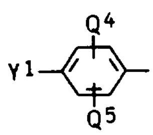

oder

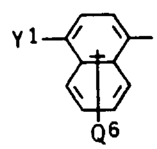

worin

$Y^1$ die obengenannte Bedeutung,

$Q^4$ die Bedeutung von Wasserstoff,

$Q^5$ die Bedeutung von Wasserstoff, Methyl oder Ethyl und

$Q^6$ die Bedeutung von Wasserstoff besitzen,

$L^8$ für $C_1$-$C_{10}$-Alkoxy oder Benzyloxy und

$L^{10}$ für Wasserstoff, Methyl, Ethyl, Methoxy oder Chlor stehen.

Ganz besonders hervorzuheben sind Malonsäurefarbstoffe der Formel I, in der Chr den Rest eines Chromophors bedeutet, der sich von einem Bis- oder insbesondere einem Trisazofarbstoff oder einem Perylenfarbstoff ableitet.

Die Herstellung der erfindungsgemäßen Malonsäurefarbstoffe erfolgt nach an sich bekannten Methoden. Beispielsweise kann man Malonsäureester mit einer Dihalogenverbindung der Formel VI

Hal-A-Hal (VI),

in der Hal Halogen, insbesondere Brom, bedeutet und A die obengenannte Bedeutung besitzt, in Gegenwart einer Base alkylieren und das resultierende Alkylmalonsäurederivat mit einem Farbstoff der Formel VII

H-Y-Chr (VII),

in der Chr die obengenannte Bedeutung besitzt und Y für einen der obengenannten Reste $Y^1$, $Y^2$ oder $Y^3$ steht, in Gegenwart einer Base zum Zielprodukt umsetzen.

Die neuen Malonsäurefarbstoffe weisen eine gute Löslichkeit in den gebräuchlichen organischen Lösungsmitteln, beispielsweise N,N-Dimethylformamid, Tetrahydrofuran, Toluol oder Dichlormethan auf.

Sie eignen sich weiterhin vorteilhaft für die Herstellung von flüssigkristallinen Farbstoffen.

Verbindungen, die flüssigkristallines Verhalten zeigen, d.h. flüssigkristalline Phasen ausbilden, werden auch als Mesogene bezeichnet. Dabei handelt es sich um optisch anisotrope Flüssigkeiten, welche im Gegensatz zu normalen Flüssigkeiten eine Fernordnung ihrer Moleküle aufweisen. Beim Schmelzen einer festen mesogenen Verbindung bildet sich daher zunächst eine flüssigkristalline Phase, z.B. eine smektische, die bei weiterer Temperaturerhöhung bei einer bestimmten Phasenübergangstemperatur entweder in eine weitere Phase, z.B. eine nematisch flüssigkristalline Phase, oder in die optisch isotrope Schmelze übergeht. Kühlt man letztere wieder ab, so bilden sich bei den entsprechenden Umwandlungstemperaturen die flüssigkristallinen Phasen und letztlich der kristalline Zustand wieder zurück. Bei Polymeren mit mesogenen Seitengruppen, d.h Gruppen, die sich von mesogenen Verbindungen ableiten, ist es indes möglich, den einmal erzeugten flüssigkristallinen Zustand beim Abkühlen einzufrieren, wenn man die flüssigkristalline Polymerschmelze unter eine bestimmte Temperatur, z.B. die Glastemperatur des Polymeren, abkühlt, so daß ein optisch anisotroper Festkörper resultiert, der nicht kristallin, sondern glasförmig ist.

Flüssigkristalline Phasen können in der Schmelze oder in eingefrorenem Zustand leicht anhand ihrer optischen Anisotropie nachgewiesen werden. So zeigen sie beispielsweise unter dem Polarisationsmikroskop bei gekreuzten Polarisatoren doppelbrechende Texturen, wogegen isotrope Schmelzen dunkel erscheinen.

Man kann daher Schichten, die mesogene Verbindungen enthalten, zur Informationsaufzeichnung verwenden, indem man durch lokales Erhitzen in solche Schichten Bereiche mit veränderten optischen Eigenschaften erzeugt. Diese Bereiche können nach dem Abkühlen, sofern sie dann stabil sind, nachgewiesen, d.h. "gelesen" werden.

Flüssigkristalline Phasen lassen sich in nematische, smektische und cholesterische Phasen einteilen. Hierbei sind in einer nematisch flüssigkristallinen Phase die Schwerpunkte der Moleküle unregelmäßig verteilt, indes existiert eine Vorzugsrichtung, in der die Moleküllängsachsen der mesogenen Verbindungen ausgerichtet sind. Eng verwandt mit der nematischen ist die cholesterische flüssigkristalline Phase. Hierin sind die mesogenen Verbindungen in Mikroschichten angeordnet, wobei sich in einer einzelnen Schicht die Moleküllängsachsen nach einer bestimmten Vorzugsrichtung einheitlich ausrichten. Beim Übergang von einer Mikroschicht zur nächsten ändert sich indes die Vorzugsrichtung der Orientierung stetig in einem Drehsinn, so daß insgesamt eine schraubenförmige, helixartige Struktur der cholesterisch flüssigkristallinen Phase resultiert. Bei der smektisch flüssigkristallinen Phase werden die mesogenen Verbindungen durch die intermolekularen Wechselwirkungen parallel ausgerichtet und zu Mikroschichten zusammengefügt, die mit jeweils gleichen Abständen übereinander gestapelt sind.

Bei den neuen flüssigkristallinen Farbstoffen auf Basis von Malonsäurefarbstoffen der Formel I handelt es sich um Polykondensationsprodukte, die die Formel VIII

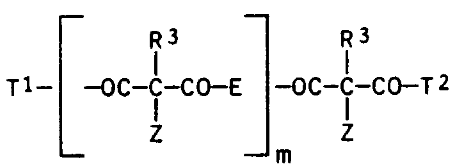

(VIII)

aufweisen, in der

$R^3$ Wasserstoff oder $C_1$-$C_6$-Alkyl,

Z einen Rest der Formel A-Chr oder einen Rest der Formel

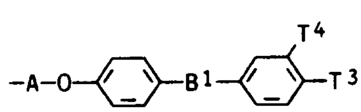

,

wobei

A für $C_1$-$C_{20}$-Alkylen, das gegebenenfalls durch ein oder mehrere Sauerstoffatome oder eine oder mehrere Imino- oder $C_1$-$C_4$-Alkyliminogruppen unterbrochen ist,

Chr für den Rest eines Chromophors, der sich von einem Anthrachinon-, Perylen-, Disazo-, Trisazo- oder, wenn $R^3$ die Bedeutung von $C_1$-$C_6$-Alkyl besitzt, von einem Monoazofarbstoff ableitet,

$B^1$ für eine chemische Bindung, Ethylen, Methylenoxy oder 1,4-Phenylen,

$T^3$ für $C_1$-$C_6$-Alkoxy, Nitro oder Cyano und

$T^4$ für Wasserstoff, $C_1$-$C_4$-Alkyl oder Halogen stehen,

E einen Rest der Formel

$-O-B^2-O-$ ,

in der $B^2$ für $C_2$-$C_{12}$-Alkylen, 1,4-Xylylen, 1,4-Cyclohexyliden oder einen Rest der Formel

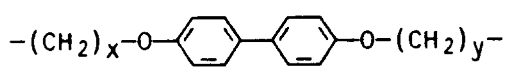

oder

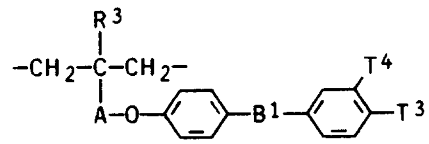

,

wobei $R^3$, A, $B^1$, $T^3$ und $T^4$ jeweils die obengenannte Bedeutung und x und y gleich oder verschieden sind und unabhängig voneinander jeweils die Bedeutung von 2 bis 12 besitzen, steht,

$T^1$ und $T^2$ gleich oder verschieden sind und unabhängig voneinander jeweils Hydroxy, $C_1$-$C_6$-Alkoxy oder den Rest E-H, wobei E die obengenannte Bedeutung besitzt, und

m 1 bis 200 bedeuten,

mit der Maßgabe, daß, bezogen auf 1 Moläquivalent des Substituenten Z, 0,001 bis 1 Moläquivalent des Rests der Formel A-Chr und 0,999 bis 0 Moläquivalent des Rests der Formel

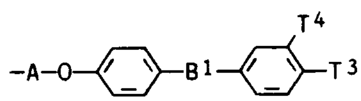

im Farbstoff der Formel VIII vorhanden sind.

Bevorzugt sind flüssigkristalline Farbstoffe der Formel VIII, in der $R^3$ Wasserstoff, $T^1$ und $T^2$ $C_1$-$C_2$-Alkoxy,

E

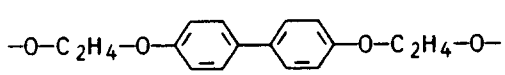

und Z einen Rest der Formel A-Chr oder einen Rest der Formel

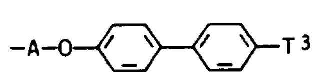

,

wobei A, Chr und $T^3$ jeweils die obengenannte Bedeutung besitzen, und m 10 bis 100, vorzugsweise 15 bis 50, bedeuten, mit der Maßgabe, daß, bezogen auf 1 Moläquivalent des Substituenten Z, 0,01 bis 0,7 Moläquivalent, insbesondere 0,05 bis 0,3 Moläquivalent, des Rests der Formel A-Chr und 0,99 bis 0,3

Moläquivalent, insbesondere 0,95 bis 0,7 Moläquivalent, des Rests der Formel

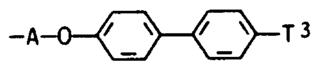

im Farbstoff der Formel VIII vorhanden sind.

Die neuen flüssigkristallinen Farbstoffe können auf an sich bekanntem Wege erhalten werden.

Um Homopolykondensationsprodukte herzustellen, kann man z.B. einen Malonsäurefarbstoff der Formel I mit einer Dihydroxykomponente der Formel IX

$HO\text{-}B^2\text{-}OH$ (IX),

in der $B^2$ die obengenannte Bedeutung besitzt, polykondensieren. Die Polykondensation erfolgt im allgemeinen in der Schmelze bei einer Temperatur von 100 bis 200 °C, gegebenenfalls in Gegenwart von geringen Mengen eines Katalysators, z.B. Nickelacetat, Tetralkylorthotitanate oder Schwefelsäure. Das Molverhältnis Farbstoff I:Dihydroxykomponente IX beträgt üblicherweise ca. 1 : 1.

Um Copolykondensationsprodukte herzustellen, kann man z.B. einen Malonsäurefarbstoff der Formel I, ein Malonsäurederivat der Formel X

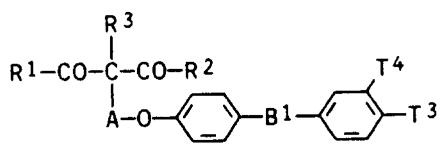
(X),

in der $R^1$, $R^2$, $R^3$, A, $B^1$, $T^3$ und $T^4$ jeweils die obengenannte Bedeutung besitzen, und die Dihydroxykomponente der Formel IX in der Schmelze kondensieren. Das Molverhältnis Malonsäurefarbstoff I:Malonsäurederivat X:Dihydroxykomponente IX beträgt im allgemeinen 0,1:99,9:100 bis 99,9:0,1:100.

Die neuen flüssigkristallinen Farbstoffe der Formel VIII eignen sich in vorteilhafter Weise für laseroptische Schreib- und Leseverfahren (siehe z.B. EP-A-278 446) oder für die Verwendung in einem optischen Aufzeichnungsmedium, wie es beispielsweise in der US-A-4 702 945 beschrieben ist. Dabei zeichnen sich die die neuen Farbstoffe VIII enthaltenden Aufzeichnungsschichten durch hohe Stabilität der eingeschriebenen Spots aus.

Weiterhin sind sie für die Anwendung in Displays gut geeignet. Displays, die die erfindungsgemäßen Farbstoffe enthalten, zeigen große Schaltbereiche und schnelle Schaltzeiten.

Die folgenden Beispiele sollen die Erfindung näher erläutern.

Beispiel 1

a) Allgemeine Herstellvorschrift für ω-Bromalkylmalonsäurediethylester

Zu einer Mischung von 1 Mol Malonsäurediethylester und 1,1 Mol des entsprechenden α,ω-Dibromalkans werden bei 100 °C eine aus 1 Grammatom Natrium und 500 ml Ethanol hergestellte Alkoholatlösung innerhalb von 2 Stunden zugetropft. Zur Vervollständigung der Reaktion wird die Mischung noch 3 Stunden bei Siedetemperatur gerührt. Nach Abkühlen wird vom entstandenen Natriumbromid abfiltriert und das Ethanol abdestilliert. Nach einmaligem Waschen mit 600 ml Wasser wird die organische Phase über Natriumsulfat getrocknet.

Im Wasserstrahlpumpenvakuum wird dann zunächst der überschüssige Malonsäurediethylester abdestilliert. Beim anschließenden Fraktionieren im Ölpumpenvakuum über eine 30 cm-Vigreux-Kolonne geht zunächst das nicht abreagierte Dibromalkan und dann der gewünschte ω-Bromalkylmalonsäurediethylester über. Im Rückstand verbleibt der als Nebenprodukt entstandene α,α,ω,ω-Alkyltetracarbonsäuretetraethylester.

6-Bromhexylmalonsäurediethylester: Ausbeute: 47 % d.Th. Sdp. (0,020 mbar): 145 bis 149 °C

10-Bromdecylmalonsäurediethylester: Ausbeute: 36 % d.Th. Sdp. (0,005 mbar): 102 bis 104 °C

12-Bromdodecylmalonsäurediethylester: Ausbeute: 41 % d.Th. Sdp. (2,0 mbar): 200 bis 205 °C.

b) ω-Bromalkylmethylmalonsäurediethylester

Die Darstellung erfolgte analog a), ausgehend von Methylmalonsäurediethylester und den entsprechenden α,ω-Dibromalkanen.

6-Bromhexylmethylmalonsäurediethylester: Ausbeute: 50 % d.Th. Sdp. (2,0 mbar): 130 bis 136 ° C
12-Bromdodecylmethylmalonsäurediethylester: Ausbeute: 40 % d. Th. Sdp. (2,0 mbar): 185 bis 187 ° C.
c)

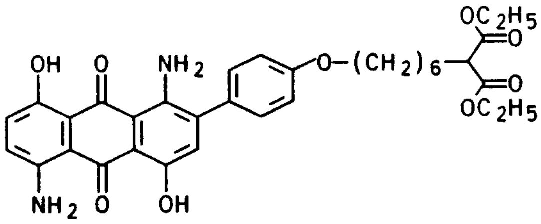

Eine Mischung aus 3,62 g (10,0 mmol) 4,8-Diamino-1,5-dihydroxy-3-(4-hydroxyphenyl)anthrachinon, 3,23 g (10,0 mmol) 6-Bromhexylmalonsäurediethylester, 5,6 g (40,0 mmol) Kaliumcarbonat, 0,5 g Kaliumiodid und 50 ml N,N-Dimethylformamid wurde 3 Stunden bei Raumtemperatur gerührt. Kaliumcarbonat wurde abfiltriert, N,N-Dimethylformamid im Ölpumpenvakuum abdestilliert (80 ° C, 20,0 mbar) und der Rückstand aus einer Mischung aus Toluol und Essigsäureethylester (40:1 v/v) umkristallisiert. Man erhielt 2,91 g (48 % d.Th.) des Zielprodukts.

$\lambda_{max}$ ($\epsilon$) (DMF): 595 nm (23627), 638 nm (29224).

| $C_{33}H_{36}N_2O_3$ (604). | | | | |
|---|---|---|---|---|
| Ber.: | C 65,6 | H 6,0 | N 4,6 | O 23,8 |
| Gef.: | C 65,8 | H 6,0 | N 4,7 | O 23,7 |

$^1$H-NMR ($CDCl_3$): $\sigma$ = 1,2 (t; 6 H, $OCH_2CH_3$), 1,4 (m; 6 H, $CH_2$), 1,9 (m; 4 H, $CH_2$), 3,3 (t; 1 H, C<u>H</u>-($CO_2C_2H_5)_2$), 4,0 (t; 2 H, $CH_2$), 4,2 (g; 4 H, $OCH_2CH_3$), 7,2 (m; 11 H, arom. C<u>H</u>, N<u>H</u>$_2$), 13,9 ppm (2 S; 2 H, O<u>H</u>).

IR (KBr): 3500 bis 3400 ($NH_2$), 3300 (OH), 3000 bis 2800 (C-H), 1720 (COO), 1600 (C = C), 1572, 1544, 1461, 1294, 1281, 1248, 1205, 1170, 827 $cm^{-1}$.

Dasselbe Ergebnis erhält man, wenn man analog a) Malonsäurediethylester mit 6-[4-(4,8-Diamino-1,5-dihydroxyanthrachinoyl)phenoxy]hexylbromid umsetzt.

Beispiel 2

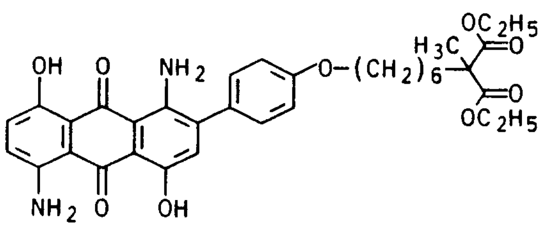

Die Herstellung erfolgte analog Beispiel 1, jedoch wurde 6-Bromhexylmethylmalonsäurediethylester verwendet.

| $C_{34}H_{48}N_2O_9$ (618) | | | | |
|---|---|---|---|---|
| Ber.: | C 65,0 | H 7,6 | N 4,5 | O 23,0 |
| Gef.: | C 64,5 | H 6,6 | N 4,2 | O 23,6. |

$^1$H-NMR ($CDCl_3$; 200 MHz): $\delta$ = 1,1 (t), 1,4 (s, m), 1,9 (m), 4,0 (t), 4,1 (q), 6,8 bis 7,4 (m), 14,0 (2 s).

IR (KBr): 3480, 3450, 3320, 3300, 3000 bis 2800, 1725, 1600, 1572, 1543, 1461, 1281, 1250, 1227, 1207, 827 $cm^{-1}$.

UV (DMF): $\lambda_{max}$ = 594 nm (20296), 639 nm (25111).

Beispiel 3

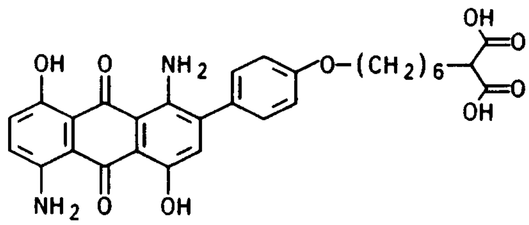

3,02 g (5,00 mmol) des gemäß Beispiel 1c) erhaltenen Farbstoffs wurden in eine Lösung von 1,00 g (17,5 mmol) Kaliumhydroxid, 1,50 ml Wasser und 30 ml Isopropanol eingetragen. Das Reaktionsgemisch wurde 2 Stunden unter Rückfluß erhitzt und das Lösungsmittel anschließend abdestilliert. Der Rückstand wurde in 50 ml Wasser gelöst. Dann wurde mit Salzsäure ein pH-Wert von 1 eingestellt und abgesaugt. Der Rückstand wurde erneut mit 50 ml Wasser aufgerührt, abgesaugt und unter vermindertem Druck bei 60 °C getrocknet. Man erhielt 2,7 g des Zielprodukts.

| $C_{29}H_{28}N_2O_9$ (548) | | | | |
|---|---|---|---|---|
| Ber.:<br>Gef.: | C 63,5<br>C 63,0 | H 5,1<br>H 5,7 | N 5,1<br>N 4,9 | O 26,3<br>O 26,4 |

$^1$H-NMR ($D_6$-DMSO): $\delta$ = 1,3; 1,7 (m, 10 H, $CH_2$); 3,2 (t, $^1$H, C<u>H</u>($COOC_2H_5)_2$); 4,0 (t, 2 H, $CH_2$); 7,2 (m, 7H, Aromat); 7,8 (m, 4H, $NH_2$); 12,5 (bs, 2 H, COO<u>H</u>); 14,0 ppm (2 s, 2 H, Ar-O<u>H</u>);
IR (KBr): 3460, 3300, 2920, 2850, 1700, 1606, 1573, 1542, 1507, 1450, 1419, 1278, 1247, 1204, 1168, 827 $cm^{-1}$.

Beispiel 4

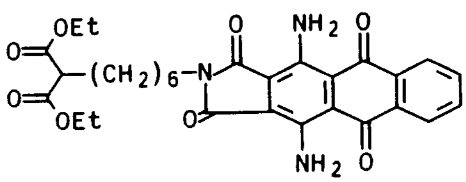

5,7 g (18,5 mmol) 1,4-Diamino-2,3-dicarboximidanthrachinon und 3,4 g (25,0 mmol) feingepulvertes, geglühtes Kaliumcarbonat wurden in 40 ml absolutem Aceton vorgelegt. Nach Zugabe einer Spatelspitze von Kaliumiodid wurde eine Lösung von 4,2 g (18,5 mmol) 6-Bromhexylmalonsäurediethylester in 5 ml absolutem Aceton innerhalb von 1 Stunde in die siedende Reaktionsmischung getropft. Zur Vervollständigung der Umsetzung wurde noch 3 Stunden unter Rückfluß erhitzt. Anschließend wurde über eine Glasfritte abgesaugt und der Rückstand mit warmem Aceton nachgewaschen. Nach Abdestillieren des Acetons wurde das erhaltene Rohprodukt dreimal aus Ethanol umkristallisiert. Man erhielt 7,3 g (67 %) des Zielprodukts vom Schmelzpunkt 123 °C.

| $C_{29}H_{31}N_3O_8$ (549) | | | | |
|---|---|---|---|---|
| Ber.:<br>Gef.: | C 63,4<br>C 62,5 | H 5,7<br>H 5,1 | N 7,7<br>N 7,2 | O 23,3<br>O 23,0 |

IR (KBr): 3460, 3330, 3000 bis 2800, 1738, 1723, 1695, 1605, 1581, 1565, 1440, 1325, 1291, 1263, 1171, 1030, 960, 950, 760, 730, 630, 608 $cm^{-1}$.
$^1$H-NMR ($D_6$-DMSO): $\delta$ = 1,20 (t; 6 H), 1,30 (bs; 4 H), 1,60 (m; 2 H), 1,80 (m; 2 H), 2,50 (s; 4 H), 3,30 (s; 2

H), 3,40 (m; 1 H), 4,10 (m; 4 H), 6,4 bis 7,2 (bs; 4 H), 7,80 (m; 2 H), 8,05 (m; 2 H), 8,40 bis 9,00 (bs; 2 H).
UV (DMF) : $\lambda_{max}$ = 673 nm (13923).

Beispiel 5

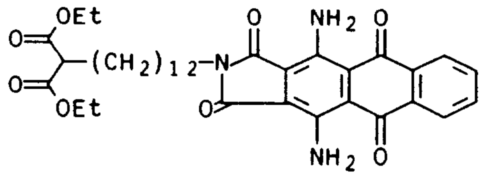

Die Darstellung erfolgte analog Beispiel 4.

| $C_{35}H_{43}N_3O_8$ (633,8) | | | | |
|---|---|---|---|---|
| Ber.:<br>Gef.: | C 66,3<br>C 66,0 | H 6,8<br>H 6,2 | N 6,6<br>N 5,8 | O 20,2<br>O 19,5 |

IR (KBr): 3460, 3420, 3320, 3300, 2980, 2920, 2850, 1746, 1733, 1691, 1562, 1445, 1322, 1300, 1171, 1155, 1060, 1040, 950, 760, 720, 660, 640 $cm^{-1}$.
$^1$H-NMR ($D_6$-DMSO): $\delta$ = 1,10 (t; 6 H), 1,40 (m; 4 H), 1,60 (m; 2 H), 1,70 (m; 2 H), 3,30 bis 3,60 (m; 3 H), 4,10 (q; 4 H), 6,40 bis 7,20 (bs; 2 H), 7,90 (m; 2 H), 8,20 (m; 2 H), 8,40 bis 9,00 (bs; 2 H).
UV (DMF): $\lambda_{max}$ = 673 nm (13529).

Beispiel 6

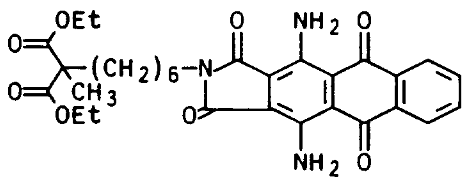

Die Darstellung erfolgte analog Beispiel 4.

| $C_{30}H_{33}N_3O_8$ (563,6) | | | | |
|---|---|---|---|---|
| Ber.:<br>Gef.: | C 63,9<br>C 64,0 | H 5,9<br>H 6,2 | N 7,5<br>N 7,3 | O 22,7<br>O 22,8 |

$^1$H-NMR (200 MHz; $CDCl_3$): $\delta$ = 1,2 (t; 6 H), 1,4 (s), 1,7 (m), 1,9 (m) (13 H), 3,6 (t; 2 H), 4,2 (q; 4 H), 7,8 (m), 8,2 (m) (4 H), 10,0 bis 14,0 ppm (m; 4 H).
IR (KBr): 3450, 3410, 3310, 3280, 3000 bis 2800, 1747, 1725, 1688, 1603, 1563, 1295, 1276, 1254, 1155 $cm^{-1}$.
UV (DMF): $\lambda_{max}$ = 673 nm (15065).

Beispiel 7

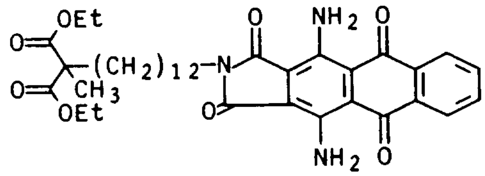

Die Darstellung erfolgte analog Beispiel 4.

| $C_{36}H_{45}N_3O_8$ (647) | | | | |
|---|---|---|---|---|
| Ber.: | C 66,8 | H 7,0 | N 6,5 | O 19,8 |
| Gef.: | C 65,4 | H 6,8 | N 7,0 | O 18,7 |

$^1$H-NMR (200 MHz, $CDCl_3$): $\delta$ = 1,2 (t; 6 H), 1,4 (s; 3 H), 1,7 (m), 1,9 (m) (24 H), 3,6 (t; 2 H), 4,2 (q; 4 H), 7,8 (m), 8,2 (m) (4 H), 10,0 bis 14,0 ppm (1 m; 4 H).
IR (KBr): 3450, 3420, 3320, 3290, 3000 bis 2800, 1729, 1691, 1600, 1561, 1545, 1297, 1258, 1172, 1159 $cm^{-1}$.
UV (DMF): $\lambda_{max}$ = 672 nm (13821 $mol^{-1}l^{-1}$).

Beispiel 8

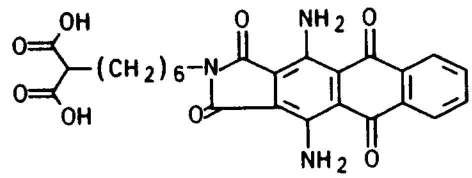

Die Darstellung erfolgte analog Beispiel 3.

| $C_{25}H_{23}N_3O_8$ (493,5) | | | | |
|---|---|---|---|---|
| Ber.: | C 60,9 | H 4,7 | N 8,5 | O 25,9 |
| Gef.: | C 59,0 | H 4,8 | N 7,2 | O 25,6. |

Beispiel 9

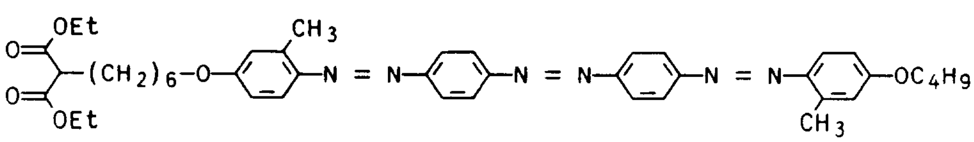

Die Darstellung erfolgte analog Beispiel 1.

| $C_{44}H_{54}N_6O_6$ (763) | | | | |
|---|---|---|---|---|
| Ber.: | C 69,3 | H 7,1 | N 11,0 | O 12,6 |
| Gef.: | C 68,5 | H 7,1 | N 11,1 | O 12,5 |

$^1H$-NMR (300 MHz; $CDCl_3$): $\delta$ = 1,0 (t; 3 H), 1,3 (t; 3 H), 1,3 bis 2,0 (m; 6 H), 2,8 (s; 6 H), 3,3 bis 3,4 (t; 1 H), 4,0 (q; 4 H), 4,2 (q; 4 H), 6,8 (m; 4 H), 7,8 (d; 2 H), 8,0 bis 8,2 ppm (m; 8 H).
IR (KBr): 3000 bis 2800, 1750 bis 1700, 1600, 1490, 1450, 1285, 1240, 1110, 870, 820 $cm^{-1}$.
DSC: g <20 °C s 140 °C n 165 °C i.

Beispiel 10

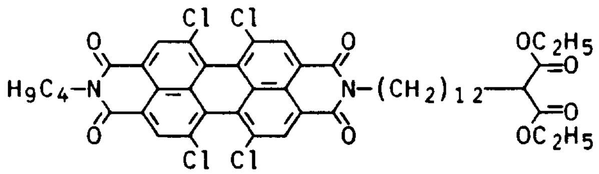

4,70 g (8,00 mmol) N-Butyl-1,6,7,12-tetrachlor-3,4,9,10-perylenbiscarboximid, 4,50 g (10,0 mmol) 12-Bromdodecylmalonsäurediethylester und 2,20 g (16,0 mmol) Kaliumcarbonat sowie eine Spatelspitze Kaliumiodid wurden zu 30 ml N,N-Dimethylformamid gegeben und 100 Stunden bei 50 °C gerührt. Kaliumcarbonat wurde abgetrennt und das Produkt mittels Säulenchromatographie geeinigt. Man erhielt 4,00 g des Zielprodukts.
Schmp: 193-195 °C
$\lambda_{max}$ ($CH_2CCl_2$) 583 nm (23.000).
In analoger Weise wurden die in der folgenden Tabelle 1 aufgeführten Farbstoffe erhalten.

Tabelle 1

| Beispiel Nr. | Farbstoff | $\lambda_{max}$ [nm] (gemessen in $CH_2Cl_2$) | ε |
|---|---|---|---|
| 11 | 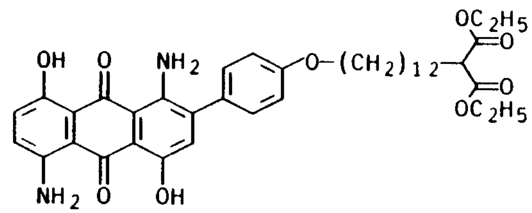 | 595<br>635 | (28735)<br>(28978) |
| 12 | 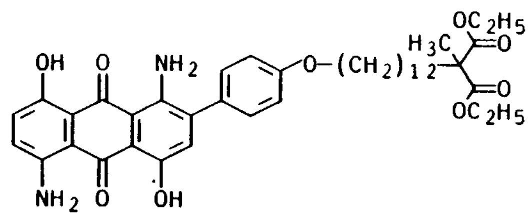 | 596<br>638 | (23738)<br>(29029) |
| 13 | 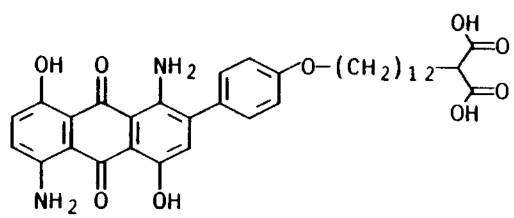 | | |

Tabelle 1 (Fortsetzung)

| Beispiel Nr. | Farbstoff | $\lambda_{max}$ [nm] (gemessen in $CH_2Cl_2$) | ε |
|---|---|---|---|
| 14 | 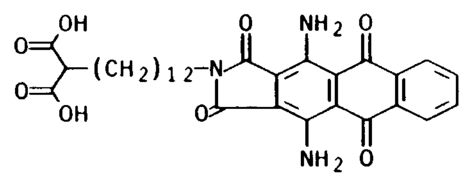 | | |
| 15 | 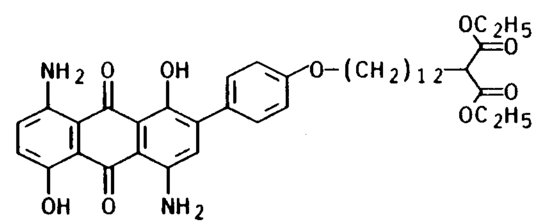 | 619 | (24519) |
| 16 | 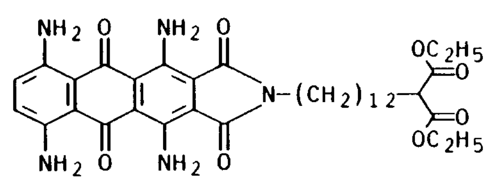 | 697<br>750 | (18500)<br>(18700) |

Beispiel 17

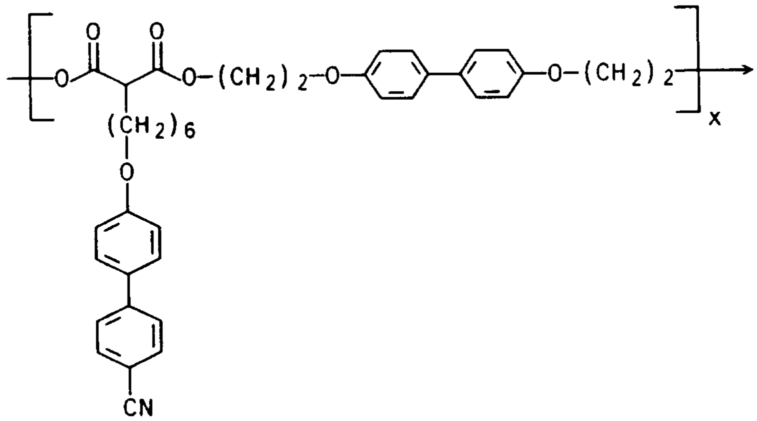

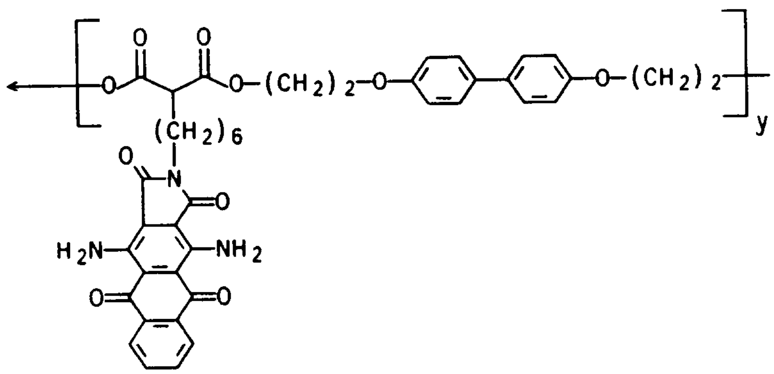

a) 4,15 g (9,5 mmol) 6-[4-(4-Cyanophenylphenoxy)hexyl]malonsäurediethylester, 270 mg (0,500 mmol) des Farbstoffs aus Beispiel 4 und 2,74 g (10,0 mmol) 4,4'-Bis(2-hydroxyethyloxy)biphenyl wurden zusammen unter Durchleitung eines trockenen Argon-Stroms auf 160 °C erhitzt. Zu der entstandenen Schmelze wurden 0,020 g Tetraisopropylorthotitanat als 20 gew.%ige Lösung in Ethylenglykoldimethylether gegeben und 2 Stunden unter Argon gerührt. Nach einer weiteren Zugabe von 0,020 g Tetraisopropylorthotitanat wurde der Druck innerhalb von 2 Stunden auf 0,1 mbar reduziert und man beließ weitere 2 Stunden bei 160 °C. Nach dem Abkühlen und Belüften mit Argon wurde das Polymer in 5 ml N,N-Dimethylformamid im Ultraschallbad gelöst und auf 1000 ml Methanol gefällt.
Ausbeute: 5,7 g Polymer. Die analytischen Daten sind in Tabelle 2 zusammengestellt.

Bei den in der obigen Formel, in Tabelle 2 sowie im folgenden genannten Indices x, y (und gegebenenfalls z) handelt es sich jeweils um Molprozente, bezogen auf ein Mol des jeweiligen Farbstoffs.

Tabelle 2

| Beispiel Nr. 17 | x:y | Reaktionsbedingungen | GPC | | DSC |
|---|---|---|---|---|---|
| | | | $\overline{Mn}$ | D | |
| a | 95: 5 | 2h/160 °C/1013 mbar; 2h/160 °C/0,1 mbar | 4928 | 1,7 | g70 °C s 125 °C n 168 °Ci |
| b | 90:10 | 2h/160 °C/1013 mbar; 2h/160 °C/0,1 mbar | 4618 | 1,7 | g70 °C s 130 °C n 166 °Ci |
| c | 90:10 | 2h/160 °C/1013 mbar; 3,5h/160 °C/0,1 mbar | 5058 | 1,8 | g65 °C s 127 °C n 171 °Ci |
| d | 80:20 | 2h/160 °C/1013 mbar; 2h/160 °C/0,1 mbar | 4461 | 1,6 | g65 °C s 127 °C n 172 °Ci |
| e | 80:20 | 2h/160 °C/1013 mbar; 2h/160 °C/0,1 mbar | 4643 | 1,6 | g65 °C s 127 °C n 172 °Ci |
| f | 80:20 | 2h/160 °C/1013 mbar; 3,5h/160 °C/0,1 mbar | 4388 | 1,8 | g65 °C s 127 °C n 180 °Ci |

Beispiel 18

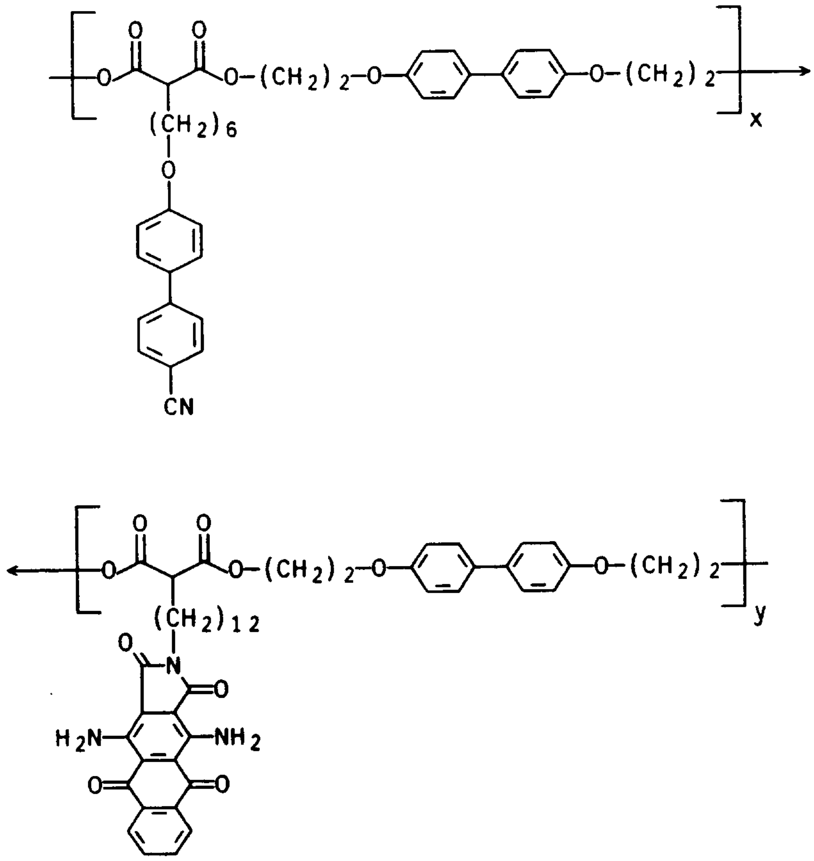

Tabelle 3

| Beispiel Nr.18 | x : y | Reaktionsbedingungen | GPC | | DSC |
|---|---|---|---|---|---|
| | | | $\overline{M}$n | D | |
| a | 95 : 5 | 2h/160°C/1013 mbar;<br>2h/160°C/0,1 mbar | 4327 | 1,8 | g75°C s 130°C n 159°Ci |
| b | 90 : 10 | 2h/160°C/1013 mbar;<br>2h/160°C/0,1 mbar | 5174 | 1,7 | g75°C s 126°C n 156°Ci |
| c | 90 : 10 | 2h/160°C/1013 mbar;<br>2h/160°C/0,1 mbar | 5461 | 1,7 | g75°C s 136°C n 171°Ci |
| d | 90 : 10 | 2h/160°C/1013 mbar;<br>6h/160°C/0,1 mbar | 5396 | 2,0 | g65°C $s_1$ 121°C $s_2$ 145°C n 174°Ci |
| e | 90 : 10 | 2h/160°C/1013 mbar;<br>14h/160°C/0,1 mbar | 6291 | 2,8 | g65°C $s_1$ 117°C $s_2$ 149°C n 176°Ci |
| f | 90 : 10 | 40h/160°C/1013 mbar;<br>50h/160°C/0,1 mbar | 5301 | 5,7 | g65°C s 114°C n 169°Ci |
| g | 90 : 10 | 2h/160°C/1013 mbar;<br>65h/160°C/0,1 mbar | 5545 | 2,6 | g65°C s 114°C n 169°Ci |
| h | 90 : 10 | 2h/160°C/1013 mbar;<br>3,5h/170°C/0,1 mbar | 6485 | 2,5 | g65°C s 114°C n 169°Ci |
| i | 90 : 10 | 2h/160°C/1013 mbar;<br>3,5h/180°C/0,1 mbar | 6130 | 2,0 | g65°C s 114°C n 169°Ci |
| j | 90 : 10 | 2h/160°C/1013 mbar;<br>3,5h/190°C/0,1 mbar | 5375 | 2,3 | g65°C s 114°C n 169°Ci |
| k | 90 : 10 | 2h/160°C/1013 mbar;<br>3,5h/200°C/0,1 mbar | 5868 | 2,2 | g65°C s 114°C n 169°Ci |

Beispiel 19

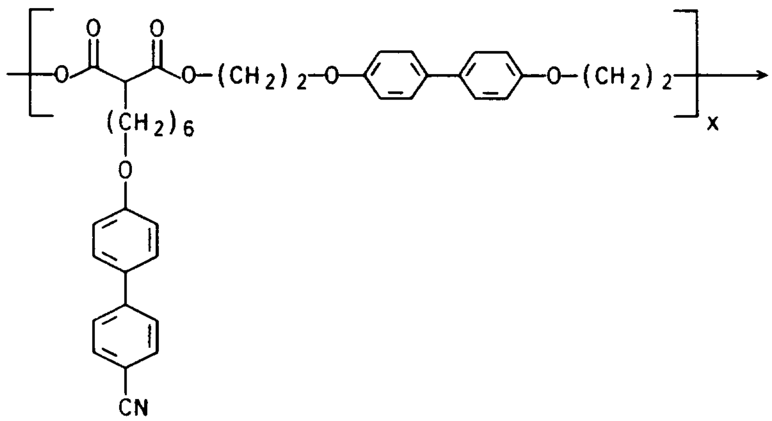

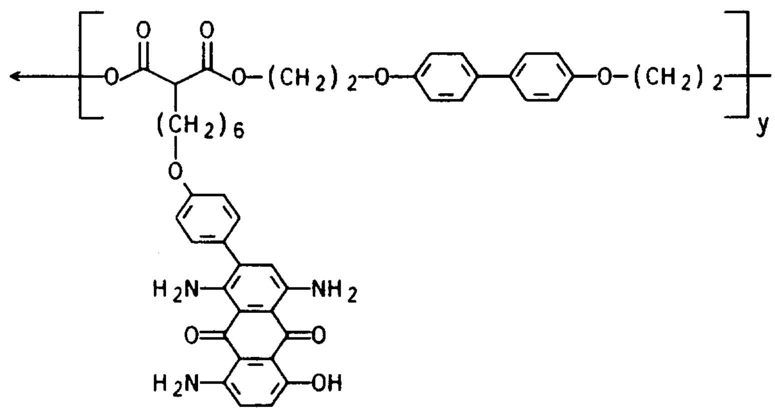

Tabelle 4

| Beispiel Nr.19 | x : y | Reaktionsbedingungen | GPC $\bar{M}n$ | GPC D | DSC |
|---|---|---|---|---|---|
| a | 90 : 10 | | 1850 | 1,3 | g65°C s 126°C n 155°Ci |
| b | 95 : 5 | | | | g75°C $s_1$ 100°C $s_2$ 125°C n 150°Ci |

Beispiel 20

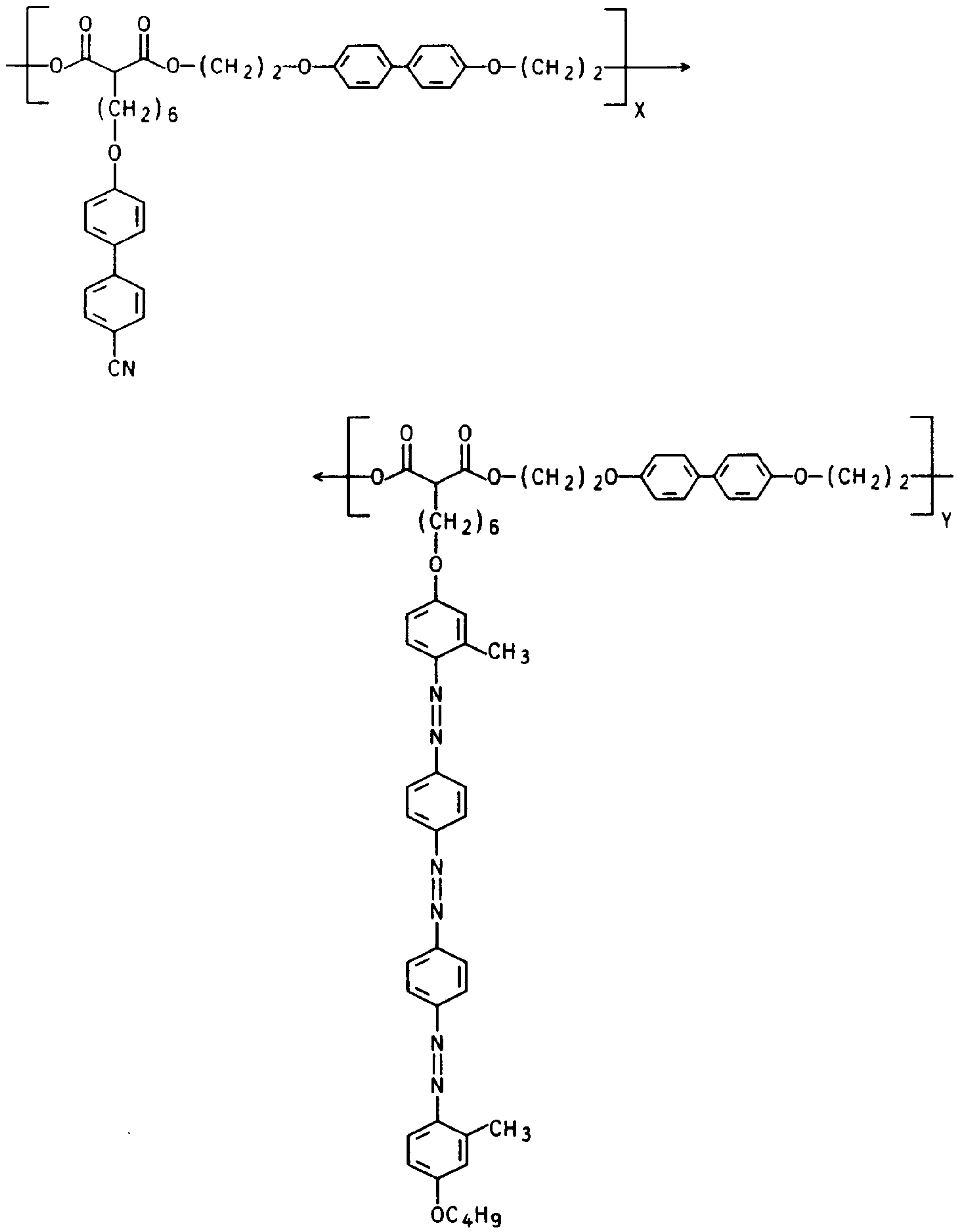

(x : y = 95 : 5)

Ausbeute: 3,2 g
Mn = 6893, D = 2, 3
DSC: g 50 °C $s_1$ 105 °C $s_2$ 140 °C n 207 °Ci
IR (KBr): 3600 bis 3400 (NH), 3200 bis 3000 (=CH), 3000 bis 2800 (-C-H) 2220 (-C≡N), 1751, 1732 (C=O), 1603 (C=C), 1498, 1289, 1269, 1242, 1176, 1152, 821 $cm^{-1}$.
$^1$H-NMR ($CDCl_3$, 300 MHz): $\delta$ = 1,00 bis 2,10; 2,80; 3,50; 3,90; 4,10; 4,50; 6,90; 7,00 bis 7,80; 8,00 bis 8,2 ppm.

Beispiel 21

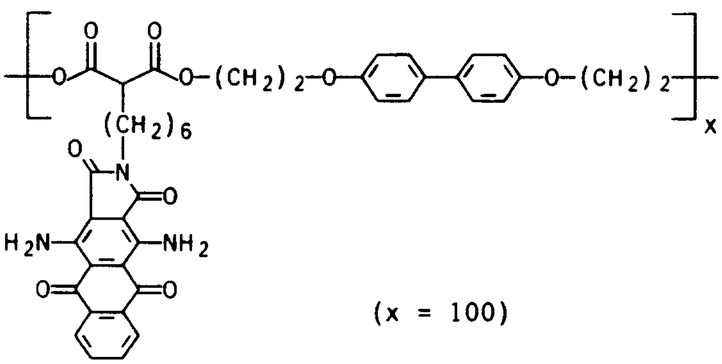

(x = 100)

2,75 g (5,00 mmol) des Anthrachinonfarbstoffs aus Beispiel 4 und 1,47 g (5,00 mmol) 4,4'-Bis-(2-Hydroxyethoxy)biphenyl wurden bei 190 °C unter Argon zusammengeschmolzen. Anschließend ließ man auf 160 °C abkühlen und gab 1 Tropfen einer Lösung von Tetraisopropyltitanat in Diglykoldimethylether (1:9) zu. Man ließ 1 Stunde bei 160 °C, eine halbe Stunde bei 165 bis 170 °C und eine weitere halbe Stunde bei 175 bis 180 °C rühren. Dann gab man nochmals 1 Tropfen der Titanatlösung zu und reduzierte den Druck innerhalb von einer halben Stunde auf 0,1 mbar. Man beliep das Reaktionsgemisch 2 Stunden bei 200 °C und destillierte das freiwerdende Ethanol ab. Dann ließ man abkühlen und belüftete mit Argon. Das Reaktionsgemisch ist unlöslich in Tetrahydrofuran und Dichlormethan. In N,N-Dimethylformamid löst sich bei 120 °C wenig; diese Lösung wurde auf Methanol gefällt. Man erhält 160 g Produkt.

Beispiel 22

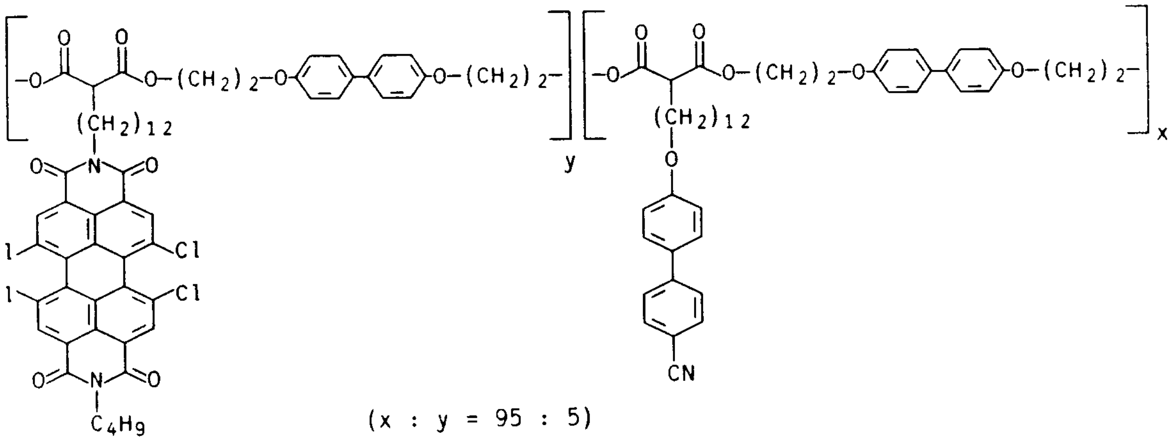

(x : y = 95 : 5)

1,97 g (4,50 mmol) 6-[4-(4-Cyanophenyl)phenoxy]hexylmalonsäurediethylester, 0,45 g (0,50 mmol) des Farbstoffs aus Beispiel 11 und 1,37 g (5,00 mmol) 4,4'-Bis(2-hydroxyethoxy)biphenyl wurden bei 180 bis 190 °C zusammengeschmolzen. Zu dieser Mischung gibt man einen Tropfen einer Lösung von Tetraisopropyltitanat in Diglykoldimethylether (1 : 9) und rührte weitere 2 Stunden bei 180 bis 190 °C. Nach einer weiteren Zugabe eines Tropfens der Katalysatormischung wurde der Druck innerhalb von 2 Stunden auf 0,1 mbar reduziert, wobei das gebildete Ethanol über eine Destillationsbrücke abgezogen wurde. Nach einer Rührzeit von 20 Stunden bei 190 °C/0,1 mbar ließ man abkühlen, belüftete mit Argon und nahm den Rückstand mit 50 ml Tetrahydrofuran auf. Die Lösung wurde filtriert und anschließend in 500 ml Methanol das Polymere gefällt. Das abfiltrierte Polymere wurde in 100 ml Tetrahydrofuran aufgenommen, filtriert und in 1 l Diethylether gefällt. Der Niederschlag wurde abfiltriert und bei 50 °C im Hochvakuum getrocknet. Man erhielt 2,60 g Polymeres mit einem Farbstoffgehalt von 5,5 % (Chloranalyse).

$\overline{M}n$ = 4411; D = 12.3

DSC: g 65 °C $s_1$ 90 °C $s_2$ 115 °C $s_3$ 135 °C n 158 °C i

UV ($CH_2CCl_2$) $\lambda_{max}$ = 519, 485, 426, 380 nm

IR (KBr): 3100-3000, 3000-2800, 2220, 1751, 1733, 1700, 1604, 1499, 1290, 1269, 1244, 1176, 1154, 822

$cm^{-1}$.

H-NMR ($CDCl_3$): δ = 1.35, 1.70, 2.00, 3.50, 3.95, 4.15, 4.50, 6.70-7.80 ppm

Die in den folgenden Beispielen aufgeführten Verbindungen werden in analoger Weise erhalten.

Beispiel 23

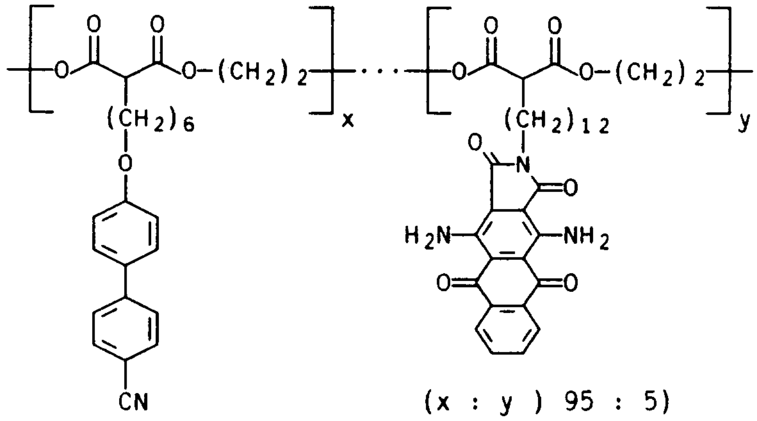

(x : y ) 95 : 5)

Beispiel 24

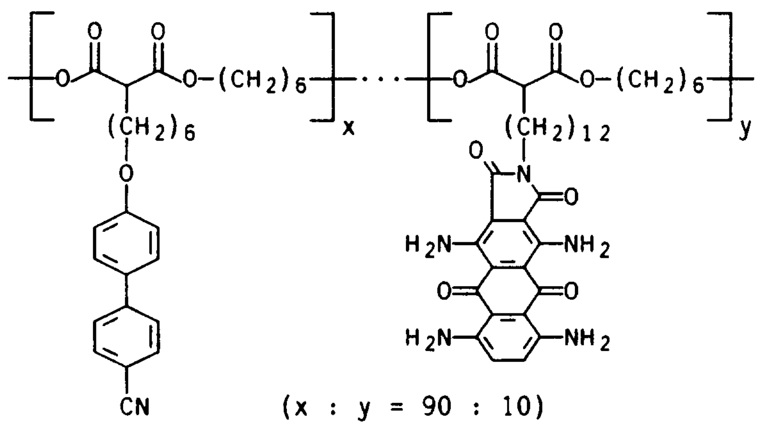

(x : y = 90 : 10)

Beispiel 25

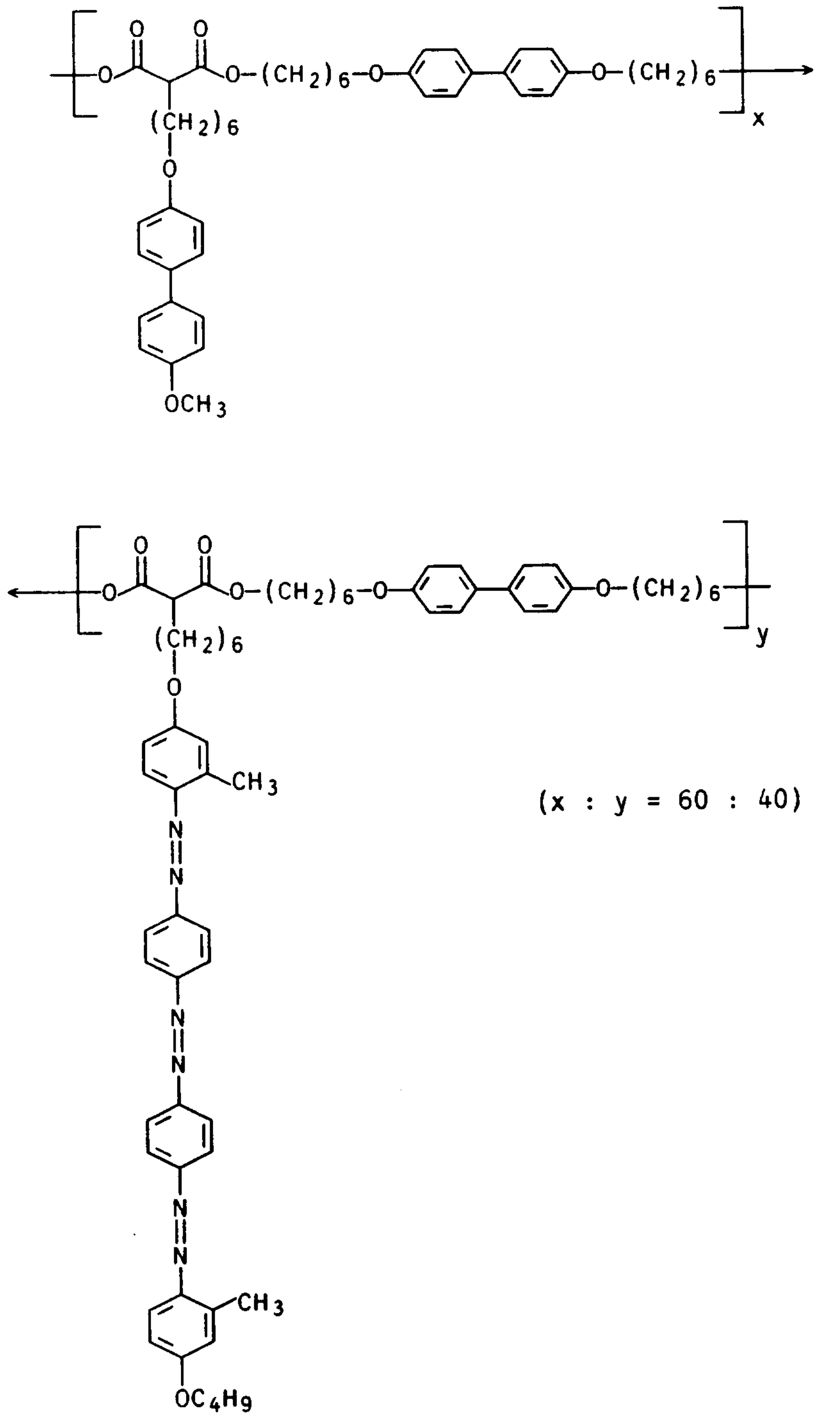

(x : y = 60 : 40)

Beispiel 26

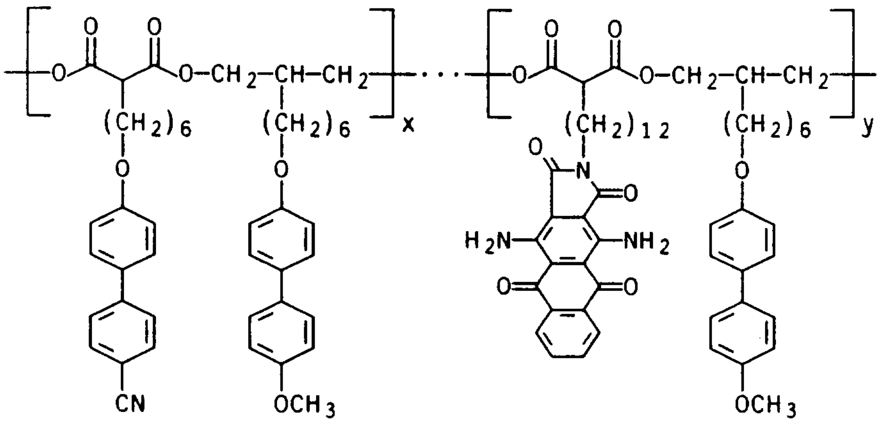

(x : y = 80 : 20)

Beispiel 27

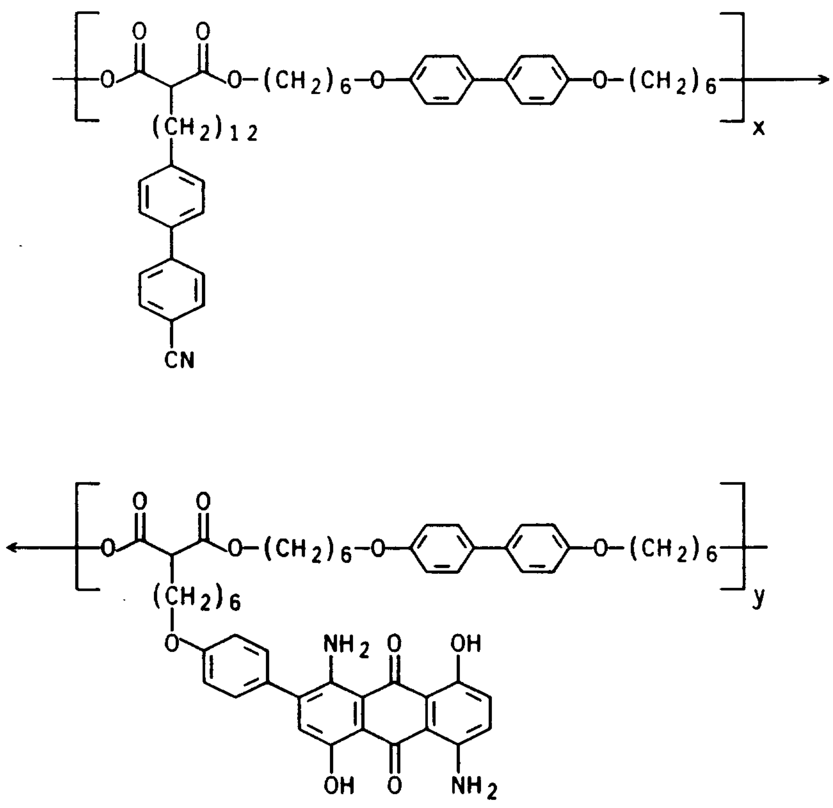

(x : y = 90 : 10)

Beispiel 28

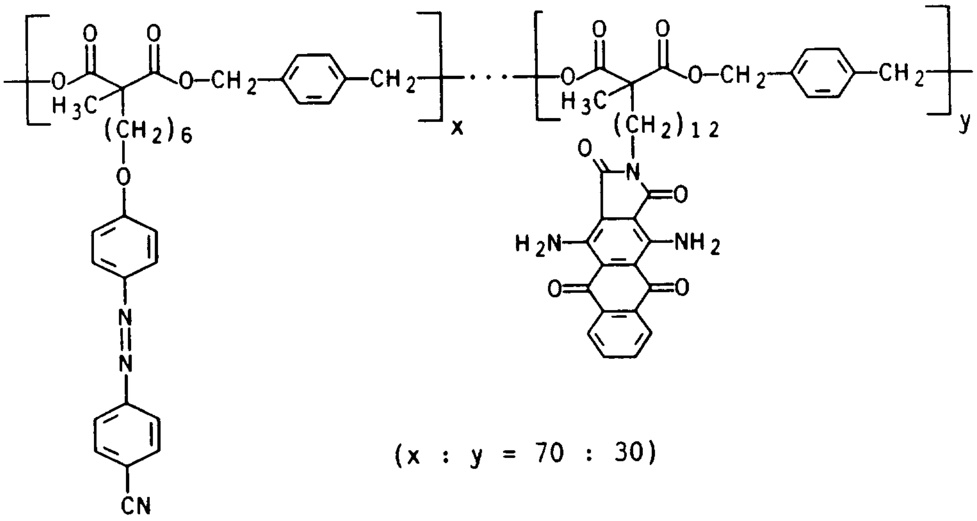

(x : y = 70 : 30)

Beispiel 29

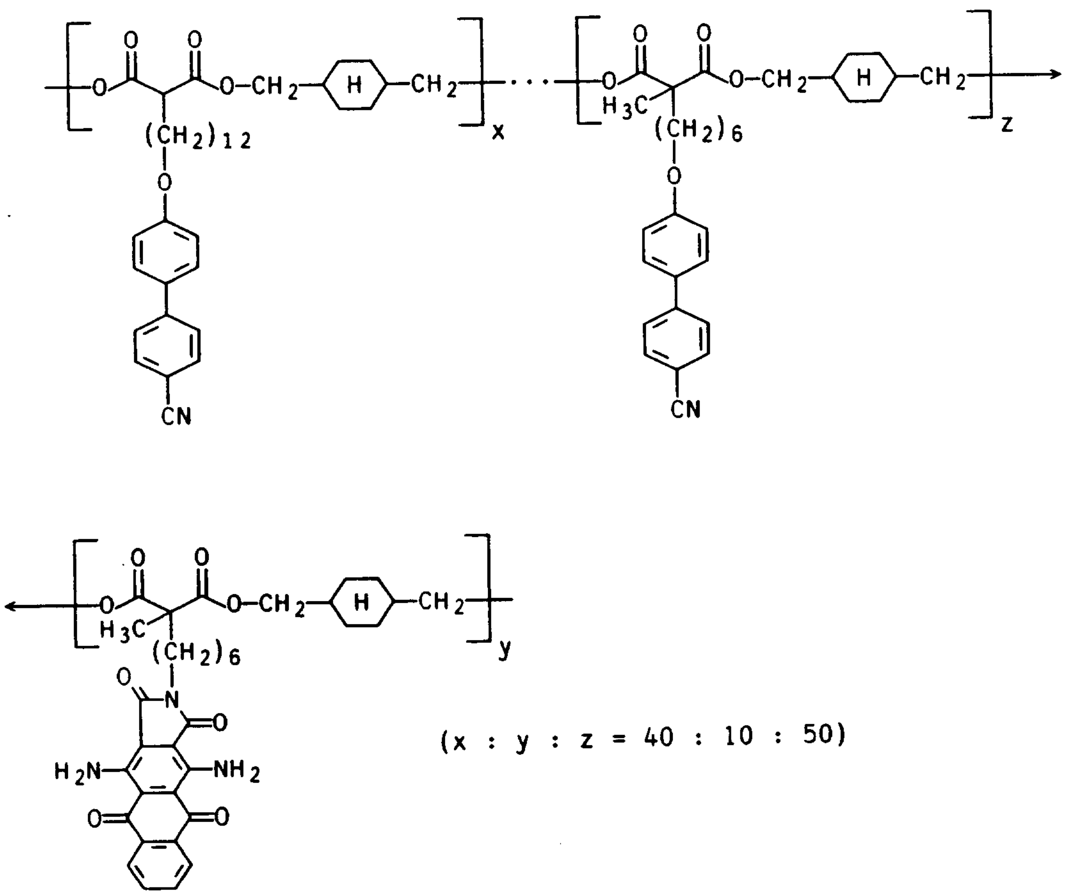

(x : y : z = 40 : 10 : 50)

Beispiel 30

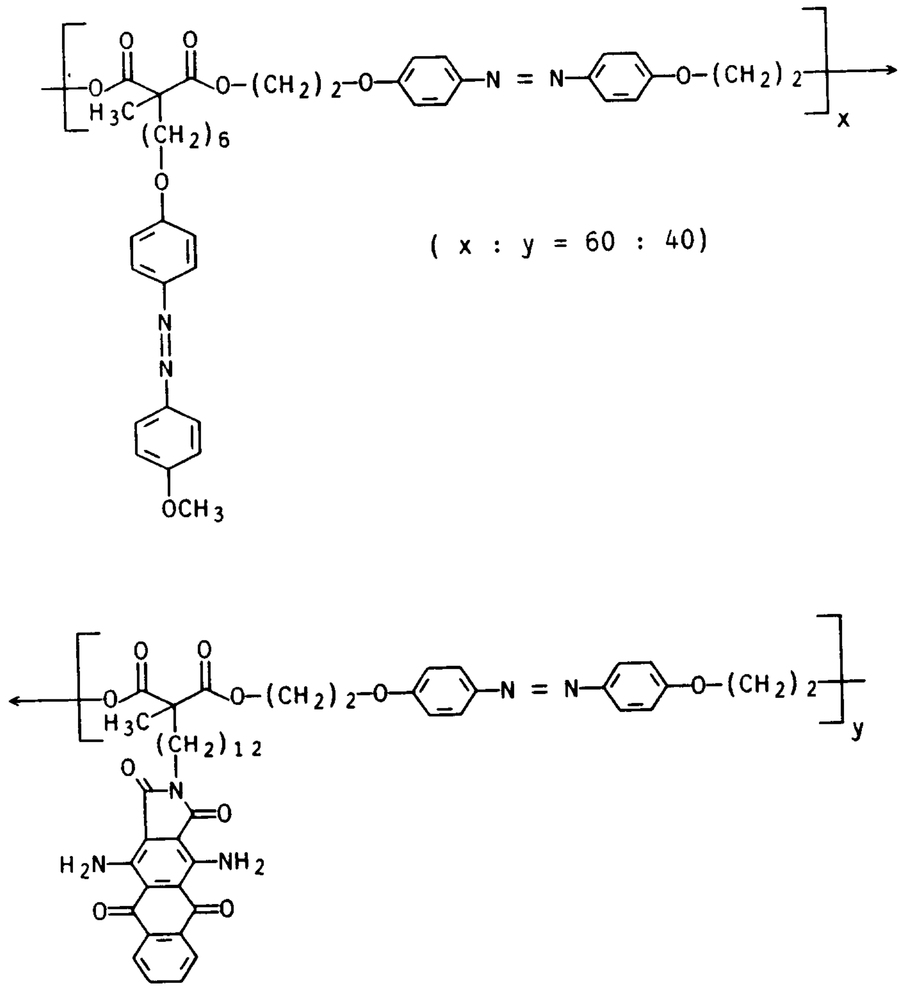

( x : y = 60 : 40)

Beispiel 31

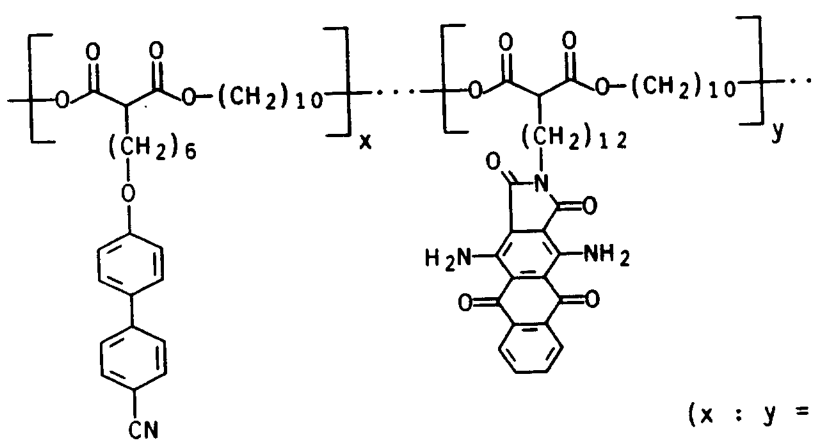

(x : y = 80 : 20)

Anwendung in optischen Datenspeichern

Allgemeine Herstellvorschrift

Auf eine gereinigte, staubfreie Glasscheibe eines Durchmessers von 13 cm wurde eine 50 bis 100 nm dicke Orientierungsschicht aus Polyimid durch Naßbeschichtung (spin coating) mit einer 3 %igen Lösung eines Polyimidvorläufers (z.B. ®ZLI 2650 der Fa. Merck) und anschließendem Trocknen und Aushärten der Naßschicht bei 300 °C aufgebracht. Danach wurde die Polyimidschicht unter Drehung der Glasplatte durch Anreiben mit Velours oder mit einer Kohlefaserbürste mit tangential verlaufenden, feinen Orientierungsrillen versehen.

Auf dieser Orientierungsschicht wurde die Aufzeichnungsschicht durch Naßbeschichtung (spin coating) mit einer 15 %igen Lösung des flüssigkristallinen Farbstoffs in Tetrachlorethan, Trocknen der Naßschicht und Tempern der trockenen Schicht bei 100 °C erzeugt. Durch das Tempern richten sich die mesogenen und dichroitischen Seitengruppen des flüssigkristallinen Farbstoffs in homogen-planarer und tangentialer Orientierung aus. Die Dicke d der Aufzeichnungsschicht wurde über die Umdrehungsgeschwindigkeit der Glasscheibe bei der Naßbeschichtung und über die Konzentration der Farbstofflösung eingestellt. Anschließend wurde die Aufzeichnungsschicht mit einer 100 nm dicken Reflektorschicht aus Gold bedampft.

Die resultierenden laseroptischen Datenplatten erlauben das Einschreiben und Lesen von Daten.

Eingeschrieben und gelesen wurde mit einem Schreib- und Lesekopf, bestehend aus

- einem HeNe-Gaslaser, welcher Licht der Wellenlänge 633 nm aussendete, wobei das Licht für das Schreiben der Daten mittels eines akustooptischen Modulators intensitätsmoduliert wurde. Die Laserleistung auf der Speicherschicht betrug beim Einschreiben 10 mW und beim Lesen im Dauerstrichbetrieb 0,5 mW, und
- einem Polarisationsstrahlteiler.

Der Polarisationsstrahlteiler war so angeordnet, daß die Polarisationsebene des auf die Speicherschicht auftreffenden Lichts mit der Direktorachse des flüssigkristallinen Farbstoffs einen Winkel von 45° bildete.

In der folgenden Tabelle 5 sind die jeweils erhaltenen Meßdaten für die Farbstoffe der Beispiele Nr. 17b, 18f und 19b aufgeführt.

Tabelle 5

| Farbstoff | Schichtdicke [µm] | Doppelbrechung (790 nm) | Ordnungsgrad | Schwellenenergiedichte [nJ/$\mu m^2$] |
|---|---|---|---|---|
| 17b | 0,7 | 0,28 | 0,65 | 1,03 |
| 18f | 0,45 | 0,17 | 0,53 | 0,72 |
| 19b | 0,30 | 0,20 | 0,36 | 0,50 |

Anwendung in Displays

a) In der folgenden Tabelle 6 sind der in handelsüblichen Displays mit homogen-planarer Randorientierung (Polyimid ZLI 1840; Fa. E. Merck, Darmstadt) bei Raumtemperatur gemessene Ordnungsgrad S, das Absorptionsmaximum $\lambda_{max}$ und die bei Raumtemperatur in ZLI 1840 gemessene Löslichkeit L für die Farbstoffe der Beispiele 1, 3, 4, 5, 10 und 11 angegeben.

Tabelle 6

| Farbstoff Nr. | 1) | 2) | 3) |
|---|---|---|---|
| 1 | 0,70 | 1,1 % | 640 nm (26000) |
| 3 | 0,65 | 0,03 % | 639 nm (27000) |
| 4 | 0,68 | 0,15 % | 680 nm (15000) |
| 5 | 0,68 | 0,8 % | 681 nm (15700) |
| 10 | 0,76 | 1,3 % | 419 nm (60500) |
| 11 | 0,76 | 1,5 % | 525 nm (23000) |

1) Ordnungsgrad S (bei RT) in ZLI 1840
2) Löslichkeit in ZLI 1840
3) $\lambda_{max}$ in ZLI 1840

b) In der folgenden Tabelle ist der in handelsüblichen Displayzellen mit homogen-planarer Randorientierung (Fa. EHZ, Tokyo) und einer Zelldicke von 2 µm gemessene Schaltbereich sowie die Schaltzeit bei $(T_k\text{-}1)\,^\circ C$ für die Farbstoffe der Beispiele 17a, 18a und 18b angegeben.

Tabelle

| Farbstoff Nr. | Schaltbereich | Schaltzeit [msec] (10→90%-Auswertung) |
|---|---|---|
| 17a | 149,5 °C-163 °C | 7,8 |
| 18a | 130 °C-158 °C | 6,0 |
| 18b | 126 °C-156 °C | 9,6 |

## Patentansprüche

**1.** Malonsäurefarbstoffe der Formel I

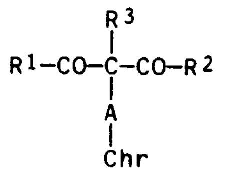

(I),

in der

| | |
|---|---|
| $R^1$ und $R^2$ | gleich oder verschieden sind und unabhängig voneinander jeweils Hydroxy, $C_1$-$C_6$-Alkoxy, Chlor oder Brom, |
| $R^3$ | Wasserstoff oder $C_1$-$C_6$-Alkyl, |
| A | $C_1$-$C_{20}$-Alkylen, das gegebenenfalls durch ein oder mehrere Sauerstoffatome oder eine oder mehrere Imino- oder $C_1$-$C_4$-Alkyliminogruppen unterbrochen ist, und |
| Chr | den Rest eines Chromophors, der sich von einem Anthrachinon-, Perylen-, Disazo-, Trisazo- oder, wenn $R^3$ für $C_1$-$C_6$-Alkyl steht, auch von einem Monoazofarbstoff ableitet, bedeuten. |

**2.** Malonsäurefarbstoffe nach Anspruch 1, dadurch gekennzeichnet, daß Chr den Rest eines Chromophors bedeutet, der sich von einem Anthrachinon-, Perylen-, Dis- oder Trisazofarbstoff ableitet.

**3.** Malonsäurefarbstoffe nach Anspruch 1, dadurch gekennzeichnet, daß Chr den Rest eines Chromophors bedeutet, der sich von einem Anthrachinon-, Perylen- oder Trisazofarbstoff ableitet.

**4.** Flüssigkristalline Farbstoffe der Formel VIII

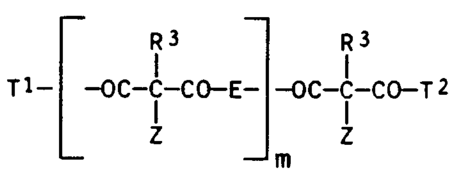

(VIII),

in der

| | |
|---|---|
| $R^3$ | Wasserstoff oder $C_1$-$C_6$-Alkyl, |
| Z | einen Rest der Formel A-Chr oder einen Rest der Formel |

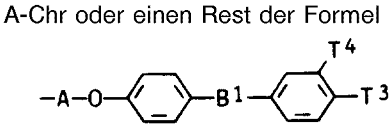

,

wobei

A für $C_1$-$C_{20}$-Alkylen, das gegebenenfalls durch ein oder mehrere Sauerstoffatome oder eine oder mehrere Imino- oder $C_1$-$C_4$-Alkyliminogruppen unterbrochen ist,

Chr für den Rest eines Chromophors, der sich von einem Anthrachinon-, Perylen-, Disazo-, Trisazo- oder, wenn $R^3$ die Bedeutung von $C_1$-$C_6$-Alkyl besitzt, von einem Monoazofarbstoff ableitet,

$B^1$ für eine chemische Bindung, Ethylen, Methylenoxy oder 1,4-Phenylen,

$T^3$ für $C_1$-$C_6$-Alkoxy, Nitro oder Cyano und

$T^4$ für Wasserstoff, $C_1$-$C_4$-Alkyl oder Halogen stehen,

E einen Rest der Formel

-O-$B^2$-O-,

in der $B^2$ für $C_2$-$C_{12}$-Alkylen, 1,4-Xylylen, 1,4-Cyclohexyliden, oder einen Rest der Formel

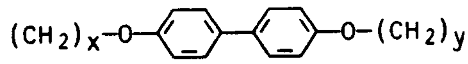 oder

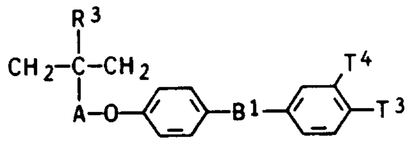 ,

wobei $R^3$, A, $B^1$, $T^3$ und $T^4$ jeweils die obengenannte Bedeutung und x und y gleich oder verschieden sind und unabhängig voneinander jeweils die Bedeutung von 2 bis 12 besitzen, steht,

$T^1$ und $T^2$ gleich oder verschieden sind und unabhängig voneinander jeweils Hydroxy, $C_1$-$C_6$-Alkoxy oder den Rest E-H, wobei E die obengenannte Bedeutung besitzt, und

m 1 bis 200 bedeuten,

mit der Maßgabe, daß, bezogen auf 1 Moläquivalent des Substituenten Z, 0,001 bis 1 Moläquivalent des Rests der Formel A-Chr und 0,999 bis 0 Moläquivalent des Rests der Formel

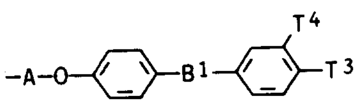

im Farbstoff der Formel VIII vorhanden sind.

**5.** Flüssigkristalline Farbstoffe nach Anspruch 4, dadurch gekennzeichnet, daß $R^3$ Wasserstoff, $T^1$ und $T^2$ $C_1$-$C_2$-Alkoxy,
E

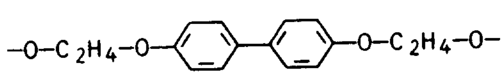

und Z einen Rest der Formel A-Chr oder einen Rest der Formel

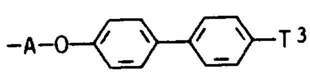 ,

wobei A, Chr und $T^3$ jeweils die in Anspruch 4 genannte Bedeutung besitzen, und m 10 bis 100 bedeuten, mit der Maßgabe, daß, bezogen auf 1 Moläquivalent des Substituenten Z, 0,01 bis 0,7 Moläquivalent des Rests der Formel A-Chr und 0,99 bis 0,3 Moläquivalent des Rests der Formel

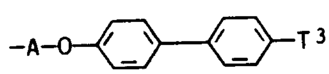

im Farbstoff der Formel VIII vorhanden sind.

**Claims**

**1.** A malonic acid dye of the formula I

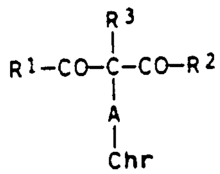

(I)

where

| | |
|---|---|
| $R^1$ and $R^2$ | are identical or different and each is independently of the other hydroxyl, $C_1$-$C_6$-alkoxy, chlorine or bromine, |
| $R^3$ | is hydrogen or $C_1$-$C_6$-alkyl, |
| A | is $C_1$-$C_{20}$-alkylene which may be interrupted by one or more oxygen atoms or by one or more imino or $C_1$-$C_4$-alkylimino groups, and |
| Chr | is the radical of a chromophore derived from an anthraquinone, perylene, disazo or trisazo dye or else, when $R^3$ is $C_1$-$C_6$-alkyl, from a monoazo dye. |

**2.** A malonic acid dye as claimed in claim 1, wherein Chr is the radical of a chromophore derived from an anthraquinone, perylene, disazo or trisazo dye.

**3.** A malonic acid dye as claimed in claim 1, wherein Chr is the radical of a chromophore derived from an anthraquinone, perylene or trisazo dye.

**4.** A liquid crystalline dye of the formula VIII

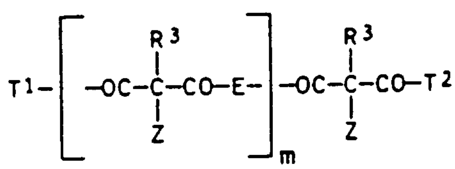

(VIII)

where

| | |
|---|---|
| $R^3$ | is hydrogen or $C_1$-$C_6$-alkyl, |
| Z | is a radical of the formula A-Chr or a radical of the formula |

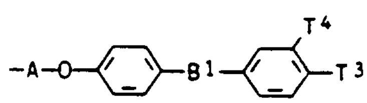

,

where

| | |
|---|---|
| A | is $C_1$-$C_{20}$-alkylene which may be interrupted by one or more oxygen atoms or by one or more imino or $C_1$-$C_4$-alkylimino groups, |
| Chr | is the radical of a chromophore derived from an anthraquinone, perylene, disazo or trisazo dye or else, when $R^3$ is $C_1$-$C_6$-alkyl, from a monoazo dye, |
| $B^1$ | is a chemical bond, ethylene, methyleneoxy or 1,4-phenylene, |
| $T^3$ | is $C_1$-$C_6$-alkoxy, nitro or cyano, and |
| $T^4$ | is hydrogen, $C_1$-$C_4$-alkyl or halogen, |
| E | is a radical of the formula |

$-O-B^2-O-$

where $B^2$ is $C_2$-$C_{12}$-alkylene, 1,4-xylylene, 1,4-cyclo hexylidene or a radical of the formula

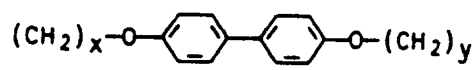

or

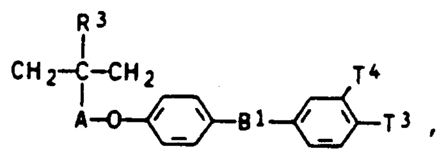

where $R^3$, A, $B^1$, $T^3$ and $T^4$ are each as defined above and x and y are identical or different and each is independently of the other from 2 to 12,

$T^1$ and $T^2$ are identical or different and each is indepen dently of the other hydroxyl, $C_1$-$C_6$-alkoxy or E-H, where E is as defined above, and

m is from 1 to 200,

with the proviso that, based on 1 mol equivalent of substituent Z, from 0.001 to 1 mol equivalent of the radical of the formula A-Chr and from 0.999 to 0 mol equivalent of the radical of the formula

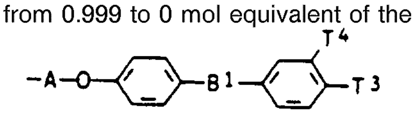

are present in the dye of the formula VIII.

**5.** A liquid crystalline dye as claimed in claim 4, wherein $R^3$ is hydrogen, $T^1$ and $T^2$ are each $C_1$-$C_2$-alkoxy,
E is

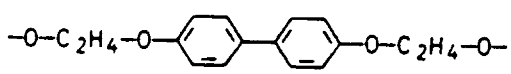

and Z is a radical of the formula A-Chr or a radical of the formula

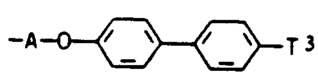

,

where A, Chr and $T^3$ are each as defined in claim 4, and m is from 10 to 100, with the proviso that, based on 1 mol equivalent of substituent Z, from 0.01 to 0.7 mol equivalent of the radical of the formula A-Chr and from 0.99 to 0.3 mol equivalent of the radical of the formula

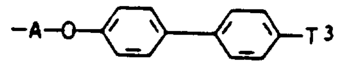

are present in the dye of the formula VIII.

## Revendications

**1.** Colorants dérivés de l'acide malonique de formule I

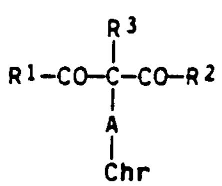

(I),

dans laquelle

$R^1$ et $R^2$ sont identiques ou différents et représentent chacun, indépendamment l'un de l'autre, un radical hydroxy, alcoxy en $C_1$-$C_6$ ou un atome de chlore ou de brome,

$R^3$ représente un atome d'hydrogène ou un radical alkyle en $C_1$-$C_6$,

A représente un radical alkylène en $C_1$-$C_{20}$ qui est éventuellement interrompu par un ou plusieurs atomes d'oxygène ou par un ou plusieurs groupements imino ou alkylimino en $C_1$-$C_4$),

Chr représente le reste d'un chromophore qui dérive d'un colorant anthraquinonique, pérylénique, disazoïque, trisazoïque ou encore, lorsque $R^3$ est mis pour un radical alkyle en $C_1$-$C_6$, d'un colorant monoazoïque.

**2.** Colorants dérivés de l'acide malonique selon la revendication 1, caractérisés en ce que Chr représente le reste d'un chromophore qui dérive d'un colorant anthraquinonique, pérylénique, dis- ou trisazoïque.

**3.** Colorants dérivés de l'acide malonique selon la revendication 1, caractérisés en ce que Chr représente le reste d'un chromophore qui dérive d'un colorant anthraquinonique, pérylénique ou trisazoïque.

**4.** Colorants cristallins liquides de formule VIII

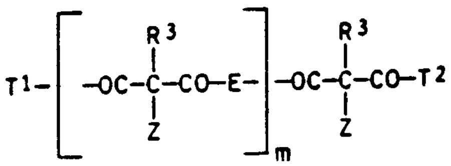 (VIII),

dans laquelle

$R^3$ représente un atome d'hydrogène ou un radical alkyle en $C_1$-$C_6$,

Z représente un reste de formule A-Chr ou un reste de formule

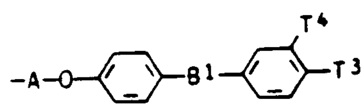 ,

où

A est mis pour un radical alkylène en $C_1$-$C_{20}$ qui est éventuellement interrompu par un ou plusieurs atomes d'oxygène ou par un ou plusieurs groupements imino ou alkylimino en $C_1$-$C_4$),

Chr est mis pour le reste d'un chromophore qui dérive d'un colorant anthraquinonique, pérylénique, disazoïque, trisazoïque ou encore, lorsque $R^3$ représente un radical alkyle en $C_1$-$C_6$, d'un colorant monoazoïque.

$B^1$ est mis pour une liaison chimique ou pour un radical éthylène, méthylènoxy ou 1,4-phénylène,

$T^3$ est mis pour un radical alcoxy en $C_1$-$C_6$, nitro ou cyano et

$T^4$ est mis pour un atome d'hydrogène, d'halogène ou pour un radical alkyle en $C_1$-$C_4$.

E représente un reste de formule

-O-$B^2$-O-

dans laquelle $B^2$ est mis pour un radical alkylène en $C_2$-$C_{12}$, 1,4-xylylène, 1,4-cyclohexylidène ou pour un reste de formule

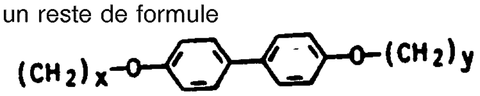 ou

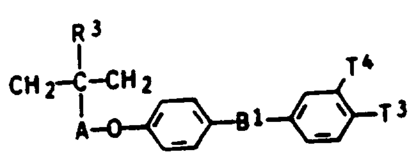 ,

où $R^3$, A, $B^1$, $T^3$ et $T^4$ ont chacun la signification susmentionnée et x et y sont identiques ou différents et représentent chacun, indépendamment l'un de l'autre, un nombre de 2 à 12,

$T^1$ et $T^2$ sont identiques ou différents et représentent chacun, indépendamment l'un de l'autre, un radical hydroxy, alcoxy en $C_1$-$C_6$ ou le reste E-H, E ayant la signification susmentionnée, et

m est un nombre de 1 à 200,

étant spécifié que, pour 1 équivalent molaire du substituant Z, 0,001 à 1 équivalent molaire du reste de formule A-Chr et 0,999 à 0 équivalent molaire du reste de formule

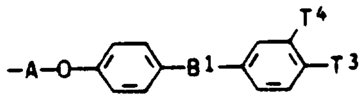

sont présents dans le colorant de formule VIII.

**5.** Colorants cristallins liquides selon la revendication 4, caractérisés en ce que $R^3$ représente un atome d'hydrogène, $T^1$ et $T^2$ représentent des radicaux alcoxy en $C_1$-$C_2$, E est un reste de formule

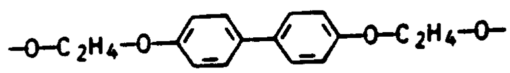

Z est un reste de formule A-Chr ou un reste de formule

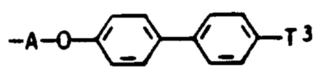 ,

où A, Chr et $T^3$ ont chacun la signification indiquée dans la revendication 4 et m est un nombre de 10 à 100, étant spécifié que, pour 1 équivalent molaire du substituant Z, 0,01 à 0,7 équivalent molaire du reste de formule A-Chr et 0,99 à 0,3 équivalent molaire du reste de formule

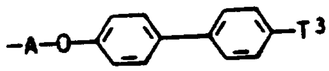

sont présents dans le colorant de formule VIII.